# EUROPEAN PATENT APPLICATION

(11) **EP 4 797 580 A1**
(43) Date of publication of application: **26.08.2026**
(21) Application number: 24884921.8
(22) Date of filing: 31.10.2024
(51) Int. Cl.: H04L 1/00

(54) **COMMUNICATION METHOD AND COMMUNICATION APPARATUS**

(30) Priority: 03.11.2023 CN 202311471704
(71) Applicant: HUAWEI TECHNOLOGIES CO., LTD., Shenzhen 518129 (CN)
(72) Inventor: PAN, Qi, Shenzhen, Guangdong 518129 (CN); NI, Hui, Shenzhen, Guangdong 518129 (CN)
(74) Representative: Goddar, Heinz J.
(86) International application number: PCT/CN2024/129009
(87) International publication number: WO 2025/092923

(57) **Abstract**

A communication method and a communication apparatus are disclosed. The method includes: An access network device receives a first protocol data unit PDU set, where the first PDU set includes at least two data packet sets, each data packet set includes at least one first data packet and at least one second data packet, and the at least one second data packet is a redundant data packet of the at least one first data packet. The access network device sends the first PDU set when a transmission parameter of each data packet set in the first PDU set is less than a corresponding first threshold. This ensures that redundancy-based integrity transmission of a PDU set can be implemented when the PDU set is in different FEC redundancy addition modes.

## Description

This application claims priority to Chinese Patent Application No. 202311471704.2, filed with the China National Intellectual Property Administration on November 3, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

To meet a delay requirement of an extended reality (Extended Reality, XR) service or the like, a quality of service (Quality of Service, QoS) processing mechanism for a protocol data unit set (Protocol Data Unit Set, PDU Set) is proposed in a current standard, and a data packet in the PDU set is scheduled, processed, and transmitted as a whole, to ensure service experience of a user. Correspondingly, a manner of processing a PDU set at specific redundancy for a service flow is also mentioned in the standard. For example, before a corresponding PDU set is sent, forward error correction (Forward Error Correction, FEC) coding is performed on the current PDU set. To be specific, an additional redundant data packet is added to avoid service experience deterioration caused by packet loss during transmission, to ensure transmission of the PDU set at limited packet loss.

However, FEC redundancy addition in a PDU set may not be performed at a PDU set granularity. For example, a redundancy addition operation (for example, an exclusive OR operation) is performed on a group of data packets in the PDU set. Therefore, there is no effective solution about how to ensure integrity transmission within a range of the group of data packets.

### SUMMARY

This application provides a communication method and a communication apparatus, to ensure that redundancy-based integrity transmission of a PDU set can be implemented when the PDU set is in different FEC redundancy addition modes.

According to a first aspect, a communication method is provided. The method may be performed by an access network device. The access network device herein may be the access network device itself, or may be a processor, a module, a chip, a chip system, or the like that is in the access network device and that implements the method. This is not limited in this application. The method includes:

The access network device receives a first protocol data unit PDU set, where the first PDU set includes at least two data packet sets, each data packet set includes at least one first data packet and at least one second data packet, and the at least one second data packet is a redundant data packet of the at least one first data packet in a same data packet set. The access network device sends the first PDU set when a transmission parameter (for example, a packet loss rate or a quantity of lost packets) of each data packet set in the first PDU set is less than a first threshold corresponding to the data packet set.

It should be understood that, in this embodiment of this application, the data packet set may be understood as a group of data packets obtained through a redundancy addition operation during forward error correction (Forward Error Correction, FEC) coding, and includes a redundant data packet generated based on a raw data packet. Specifically, the redundant data packet may be a data packet obtained through a redundancy addition operation, or may be a retransmitted data packet of the raw data packet. For example, the data packet set may include a raw data packet on which an exclusive OR operation is to be performed and a redundant data packet generated based on the exclusive OR operation.

It should be understood that the at least one second data packet being a redundant data packet of the at least one first data packet may be understood as that the at least one second data packet is a redundant data packet in the data packet set. In addition, the at least one first data packet may be a raw data packet, or may be a data packet obtained through processing (for example, negation) by an application server. This is not limited in this embodiment of this application.

It should be understood that the transmission parameter may be understood as a quantity or a proportion of lost data packets in each data packet set in a process in which the access network device receives the first PDU set (that is, a quantity of lost packets or a packet loss rate), or a quantity or a proportion of data packets that fail to be sent in each data packet set in a process in which the access network device sends the first PDU set. Alternatively, the transmission parameter may be understood as a quantity or a proportion of lost data packets in each data packet set in a process in which the access network device receives the first PDU set and data packets that fail to be sent in each data packet set in a process in which the access network device sends the first PDU set (that is, a quantity of lost packets or a packet loss rate). To be specific, the proportion or the quantity of data packets includes a proportion or a quantity corresponding to a sum of the lost data packets in each data packet set in the process in which the access network device receives the first PDU set and the data packets that fail to be sent in each data packet set in the process in which the access network device sends the first PDU set, that is, a quantity or a proportion of missing data packets in each data packet set in a process in which the access network device transmits the first PDU set.

It should be understood that a specific manner of indicating the first threshold is not limited in this embodiment of this application.

For example, the first threshold may be indicated in a form of a quantity, and indicates an upper limit value of data packets, in each data packet set, that are allowed to be discarded during transmission.

For example, the first threshold may be indicated in a form of redundancy, and indicates an upper limit value of a proportion of data packets, in each data packet set, that are allowed to be discarded during transmission, or a lower limit value of a proportion of data packets, in each data packet set, that need to be guaranteed during transmission.

According to the foregoing solution, the access network device may send the first PDU set when the transmission parameter of each data packet set in the first PDU set is less than the corresponding first threshold, to ensure that redundancy-based integrity transmission of a PDU set can be implemented when the PDU set is in different FEC redundancy addition modes.

With reference to the first aspect, in some implementations of the first aspect, the transmission parameter of each data packet set in the first PDU set includes a packet loss rate or a quantity of lost packets of the data packet set. It should be understood that the packet loss rate or the quantity of lost packets of the data packet set may be a quantity or a proportion of lost data packets in the data packet set in a process in which the access network device receives the first PDU set (that is, a quantity of lost packets or a packet loss rate), or a quantity or a proportion of data packets that fail to be sent in the data packet set in a process in which the access network device sends the first PDU set. Alternatively, a quantity or a proportion of lost data packets in the data packet set in a process in which the access network device receives the first PDU set and data packets that fail to be sent in the data packet set in a process in which the access network device sends the first PDU set (that is, a quantity of lost packets or a packet loss rate) is a proportion or a quantity of a sum of lost data packets in each data packet set in the process in which the access network device receives the first PDU set and data packets that fail to be sent in each data packet set in the process in which the access network device sends the first PDU set, that is, a quantity or a proportion of missing data packets in each data packet set in a process in which the access network device transmits the first PDU set.

With reference to the first aspect, in some implementations of the first aspect, that the access network device sends the first PDU set includes: The access network device ensures that the transmission parameter of each data packet set in the first PDU set is less than or equal to the corresponding first threshold.

It should be understood that, when the transmission parameter of each data packet set in the first PDU set is less than or equal to the corresponding first threshold and is greater than a corresponding second threshold, the access network device ensures that the transmission parameter of each data packet set in the first PDU set is less than or equal to the corresponding first threshold. To be specific, when a transmission parameter of any data packet set in the first PDU set is less than or equal to a corresponding first threshold and is greater than a corresponding second threshold, the access network device schedules sufficient network resources for a to-be-transmitted data packet in the first PDU set, to ensure integrity transmission of the first PDU set. The second threshold may be 0. To be specific, when the transmission parameter of each data packet set in the first PDU set is less than or equal to the corresponding first threshold, the access network device needs to ensure integrity transmission of the PDU set, and the transmission parameter of each data packet set in the first PDU set is less than or equal to the corresponding first threshold.

In this implementation, the access network device allocates sufficient resources to the to-be-transmitted data packet in the first PDU set, to ensure that a data packet set to which the to-be-transmitted data packet in the first PDU set belongs can be less than or equal to a corresponding first threshold during subsequent transmission, to ensure integrity transmission of the first PDU set.

For example, a RAN allocates a first time-frequency resource to the to-be-transmitted data packet in the first PDU set. The first time-frequency resource is used to ensure that the data packet set to which the to-be-transmitted data packet in the first PDU set belongs can be less than or equal to the corresponding first threshold during subsequent transmission, to ensure integrity transmission of the first PDU set. It is easily understood that a quantity of data packets that can be carried in the first time-frequency resource is greater than or equal to a quantity of to-be-transmitted data packets in the first PDU set. To be specific, the RAN ensures that a transmission parameter corresponding to each data packet set in the first PDU set can be less than or equal to a corresponding first threshold during subsequent transmission, to ensure integrity transmission of the first PDU set.

It should be understood that a specific manner of indicating the second threshold is not limited in this embodiment of this application. For a specific manner, refer to the manner of indicating the first threshold. Details are not described herein again.

It should be understood that a specific value of the second threshold is not limited in this embodiment of this application. For example, the second threshold is 0. To be specific, when finding that packet loss occurs during transmission of any data packet set in the first PDU set, the access network device allocates a first time-frequency resource to the first PDU set, to ensure integrity transmission of the first PDU set. A quantity of data packets that can be carried in the first time-frequency resource is greater than or equal to a quantity of to-be-transmitted data packets in the first PDU set.

According to the foregoing solution, the access network device can allocate sufficient resources to the first PDU set, to ensure that the transmission parameter of each data packet set in the first PDU set is less than or equal to the corresponding first threshold, to ensure that redundancy-based integrity transmission of a PDU set can be implemented when the PDU set is in different FEC redundancy addition modes.

With reference to the first aspect, in some implementations of the first aspect, the method further includes: The access network device discards the first PDU set when a transmission parameter, that is, a quantity of lost packets, of at least one data packet set in the first PDU set is greater than a corresponding first threshold.

With reference to the first aspect, in some implementations of the first aspect, that the access network device discards the first PDU set includes: The access network device discards a to-be-transmitted data packet in the first PDU set.

It should be understood that there may be one or more to-be-transmitted data packets in the first PDU set. This is not limited in this application.

It is easily understood that, when the access network device determines, in a process of receiving the first PDU set, that a transmission parameter of any data packet set in the first PDU set is greater than a corresponding first threshold, the access network device may discard a data packet, in the first PDU set, that has been received; or when the access network device determines, in a process of sending the first PDU set, that a transmission parameter of any data packet set in the first PDU set is greater than a corresponding first threshold, the access network device discards the to-be-transmitted data packet in the first PDU set.

According to the foregoing solution, when the first PDU set includes at least one data packet set whose transmission parameter is greater than the first threshold, the access network device may discard the to-be-transmitted data packet in the first PDU set, to save transmission resources when integrity transmission of the PDU set cannot be implemented.

With reference to the first aspect, in some implementations of the first aspect, all data packet sets in the first PDU set correspond to a same first threshold, or all data packet sets in the first PDU set correspond to different first thresholds.

As an example rather than a limitation, the first PDU set includes three data packet sets, where both a first threshold corresponding to a data packet set #1 and a first threshold corresponding to a data packet set #2 are 10%, and a first threshold corresponding to a data packet set #3 is 15%.

According to the foregoing solution, the at least two data packet sets in the first PDU set may correspond to different first thresholds, to improve flexibility of integrity transmission of the first PDU set.

With reference to the first aspect, in some implementations of the first aspect, before the access network device receives the first PDU set, the method further includes: The access network device receives first indication information, where the first indication information indicates the access network device to transmit the first PDU set based on the transmission parameter of each data packet set in the first PDU set and the corresponding first threshold.

It should be understood that, that the RAN sends the first PDU set based on the transmission parameter of each data packet set in the first PDU set and the corresponding first threshold may be understood as follows: sending the first PDU set when the transmission parameter of each data packet set in the first PDU set is less than or equal to the corresponding first threshold; or discarding the first PDU set when a transmission parameter of any data packet set in the first PDU set is greater than a corresponding first threshold; or during transmission of each data packet set in the first PDU set, ensuring that the transmission parameter of each data packet set in the first PDU set is less than or equal to the corresponding first threshold.

With reference to the first aspect, in some implementations of the first aspect, a first threshold corresponding to each data packet set in the first PDU set is included in the first indication information.

With reference to the first aspect, in some implementations of the first aspect, before the access network device sends the first PDU set, the method further includes: The access network device determines the at least two data packet sets in the first PDU set.

Specifically, before the access network device sends the first PDU set or before the access network device discards the first PDU set, the access network device determines the at least two data packet sets in the first PDU set.

With reference to the first aspect, in some implementations of the first aspect, that the access network device determines the at least two data packet sets in the first PDU set includes: The access network device determines the at least two data packet sets in the first PDU set based on a first quantity and a sequence number of each data packet in the first PDU set, where the first quantity is a quantity of data packets in a data packet set in the first PDU set.

As an example rather than a limitation, the sequence number of each data packet in the first PDU set may be a PDU sequence number (sequence number, SN).

It should be understood that the first quantity is a quantity of data packets in each data packet set in the first PDU set other than a last data packet set, in other words, the quantity of data packets in each data packet set in the first PDU set other than the last data packet set is fixed.

As an example rather than a limitation, a PDU set 1 includes 18 data packets, and the first quantity is 5. To be specific, each data packet set includes five data packets. In this case, data packets with sequence numbers 1 to 5 are a data packet set #1, data packets with sequence numbers 6 to 10 are a data packet set #2, data packets with sequence numbers 11 to 15 are a data packet set #3, and data packets with sequence numbers 16 to 18 are a data packet set #4.

According to the foregoing solution, the access network device can determine the at least two data packet sets based on quantities of data packets in the at least two data packet sets in the first PDU set, and then implement integrity transmission of the first PDU set based on the transmission parameter of each data packet set and the corresponding first threshold.

With reference to the first aspect, in some implementations of the first aspect, that the access network device determines the at least two data packet sets in the first PDU set includes: The access network device determines the at least two data packet sets in the first PDU set based on a second quantity and a sequence number of each data packet in the first PDU set, where the second quantity is a quantity of data packet sets in the first PDU set.

According to the foregoing solution, the access network device can determine the at least two data packet sets based on a quantity of the at least two data packet sets in the first PDU set, and then implement integrity transmission of the first PDU set based on the transmission parameter of each data packet set and the corresponding first threshold.

With reference to the first aspect, in some implementations of the first aspect, before the access network device determines the at least two data packet sets in the first PDU set based on the first quantity and a sequence number of at least one data packet in the first PDU set, the method further includes: The access network device receives second indication information, where the second indication information indicates the first quantity, and the second indication information is from a session management network element, or the second indication information is from a user plane function network element.

It should be understood that the second indication information may further indicate the second quantity or the first quantity.

According to the foregoing solution, in response to the second indication information, the access network device may determine the at least two data packet sets in the first PDU set based on the first quantity or the second quantity and the sequence number of each data packet in the first PDU set.

With reference to the first aspect, in some implementations of the first aspect, that the access network device determines the at least two data packet sets in the first PDU set includes: The access network device determines the at least two data packet sets in the first PDU set based on first information carried in at least one data packet in each data packet set in the first PDU set and a sequence number of each data packet in the first PDU set, where the first information includes a first identifier, and the first identifier indicates a data packet set to which a corresponding data packet belongs.

It should be understood that a quantity of data packets carrying the first information in each data packet set in the first PDU set is not limited in this application.

For example, a 1^{st} data packet or a last data packet in each data packet set in the first PDU set carries the first information.

For example, each data packet in each data packet set in the first PDU set carries the first information.

It should be understood that a network element that adds the first information to the at least one data packet in each data packet set in the first PDU set is not limited in this application. As an example rather than a limitation, the first information is added by a user plane network element, or the first information is added by the application server.

It should be understood that, when the 1^{st} data packet and/or the last data packet in each data packet set in the first PDU set carry/carries the first information, the access network device further needs to determine the at least two data packet sets in the first PDU set based on the sequence number of each data packet in the first PDU set.

According to the foregoing solution, the access network device may determine the at least two data packet sets in the first PDU set based on the first information carried in the at least one data packet in each data packet set in the first PDU set, and then implement integrity transmission of the first PDU set based on the transmission parameter of each data packet set and the corresponding first threshold.

With reference to the first aspect, in some implementations of the first aspect, the first information further includes a first threshold corresponding to the data packet set to which the corresponding data packet belongs.

With reference to the first aspect, in some implementations of the first aspect, the first information is carried in a general packet radio service tunneling protocol-user plane (GPRS Tunneling Protocol for User Plane, GTP-U) layer or a real-time communication protocol (Real-time Transport Protocol, RTP) layer of at least one data packet in the first PDU set.

With reference to the first aspect, in some implementations of the first aspect, that the access network device determines the at least two data packet sets in the first PDU set based on the first information carried in the at least one data packet in each data packet set in the first PDU set includes: The access network device receives third indication information, where the third indication information indicates a redundancy addition mode of the at least two data packet sets in the first PDU set. The access network device determines, based on the third indication information and the first information carried in the at least one data packet in each data packet set in the first PDU set, the at least two data packet sets in the first PDU set and/or the first threshold corresponding to each data packet set.

According to the foregoing solution, in response to the indication of the third indication information, the access network device may determine the at least two data packet sets in the first PDU set based on the first information carried in the at least one data packet in each data packet set in the first PDU set. It should be understood that the third indication information indicates the access network device to determine/obtain the first information carried in the at least one data packet in each data packet set in the first PDU set, or the access network device determines, based on the third indication information, the first information carried in the at least one data packet in each data packet set in the first PDU set, to further determine the at least two data packet sets in the first PDU set.

With reference to the first aspect, in some implementations of the first aspect, that the access network device determines the at least two data packet sets in the first PDU set includes: The access network device determines the at least two data packet sets in the first PDU set based on second information carried in each data packet in the first PDU set, where the second information is used to determine the at least one first data packet and the at least one second data packet in each data packet set.

It should be understood that a specific location of the second information is not limited in this embodiment of this application. In an example, the second information is included in an RTP layer of each data packet, and may be specifically included in an RTP data packet header or an RTP extension header. In another example, the second information is included in a GTP-U layer of each data packet.

According to the foregoing solution, the access network device may determine the at least two data packet sets in the first PDU set based on the second information carried in each data packet in the first PDU set, and then implement integrity transmission of the first PDU set based on the transmission parameter of each data packet set and the corresponding first threshold.

With reference to the first aspect, in some implementations of the first aspect, the second information is further used to determine the first threshold corresponding to each data packet set in the first PDU set, and the method further includes: The access network device determines, based on the second information carried in each data packet in the first PDU set, the first threshold corresponding to each data packet set in the first PDU set.

With reference to the first aspect, in some implementations of the first aspect, that the access network device determines the at least two data packet sets in the first PDU set based on the second information carried in each data packet in the first PDU set includes: The access network device receives third indication information, where the third indication information indicates a redundancy addition mode of the at least two data packet sets in the first PDU set. The access network device determines, based on the third indication information and the second information carried in each data packet in the first PDU set, the at least two data packet sets in the first PDU set and/or the first threshold corresponding to each data packet set.

According to the foregoing solution, in response to the indication of the third indication information, the access network device may determine the at least two data packet sets in the first PDU set based on the second information carried in each data packet in the first PDU set. It should be understood that the third indication information indicates the access network device to determine/obtain the second information carried in each data packet in the first PDU set, or the access network device determines, based on the third indication information, the second information carried in each data packet in the first PDU set, to further determine the at least two data packet sets in the first PDU set.

According to a second aspect, a communication method is provided. The method may be performed by a user plane network element. The user plane network element herein may be the user plane network element itself, or may be a processor, a module, a chip, a chip system, or the like that is in the user plane network element and that implements the method. This is not limited in this application. The method includes:

The user plane network element receives a first PDU set. The user plane network element adds first information to at least one data packet in each data packet set in the first PDU set, where the first PDU set includes at least two data packet sets, each data packet set includes at least one first data packet and at least one second data packet, the at least one second data packet is a redundant data packet of the at least one first data packet, and the first information indicates a data packet set to which the at least one data packet belongs. The user plane device sends the first PDU set.

According to the foregoing solution, after receiving the first PDU set, the user plane network element may add the first information to the at least one data packet in each data packet set in the first PDU set, to assist an access network device that receives the first PDU set in determining the at least two data packet sets in the first PDU set, and then assist the access network device in ensuring that redundancy-based integrity transmission of a PDU set can be implemented when the PDU set is in different FEC redundancy addition modes. That is, the first information is used to determine the at least two data packet set in the first PDU set.

With reference to the second aspect, in some implementations of the second aspect, before the user plane network element receives the first PDU set, the method further includes: The user plane network element receives third indication information and/or fourth indication information, where the third indication information indicates a redundancy addition mode of the at least one first data packet set, and the fourth indication information indicates the user plane network element to add the first information to the at least one data packet in each data packet set. The user plane network element adds the first information to the at least one data packet in each data packet set in the first PDU set based on the third indication information and/or the fourth indication information. To be specific, the user plane network element may add the first information to the at least one data packet in each data packet set based on the third indication information; or the user plane network element may determine the at least two data packet sets in the first PDU set based on the third indication information, and add the first information to the at least one data packet in each data packet set; or the user plane network element adds the first information to the at least one data packet in each data packet set in the first PDU set based on the fourth indication information; or the user plane network element determines the at least two data packet sets in the first PDU set based on the fourth indication information, and adds the first information to the at least one data packet in each data packet set in the first PDU set. In addition, the user plane network element determines the first information based on the third indication information and/or the fourth indication information. For specific descriptions of the first information, refer to related content in the first aspect. Details are not described herein again.

With reference to the second aspect, in some implementations of the second aspect, before the user plane network element adds the first information to the at least one data packet in each data packet set in the first PDU set, the method further includes: The user plane device determines the at least two data packet sets in the first PDU set based on second information carried in a data packet in the first PDU set, where the second information is used to determine the at least one first data packet and the at least one second data packet in each data packet set.

It should be understood that, for specific descriptions of the second information, reference may be made to related content in the first aspect. Details are not described herein again.

With reference to the second aspect, in some implementations of the second aspect, the second information is carried in a real-time communication protocol RTP layer or another layer of the at least one data packet in each data packet set in the first PDU set. This is not limited herein.

With reference to the second aspect, in some implementations of the second aspect, the method further includes: The user plane network element determines, based on the second information carried in a data packet indicated in a data packet set in the first PDU set, a first threshold corresponding to each data packet set in the first PDU set, where the first threshold is an upper limit of data packets, in a corresponding data packet set, that are allowed to be discarded, or a proportion of data packets, in a corresponding data packet set, that are allowed to be discarded.

With reference to the second aspect, in some implementations of the second aspect, that the user plane network element sends the first PDU set includes: The user plane network element sends the first PDU set when a packet loss rate of each data packet set is less than or equal to a corresponding first threshold; or the access network device discards the first PDU set when a packet loss rate of the at least one data packet set is greater than a corresponding first threshold.

It should be understood that, for specific descriptions of a transmission parameter, reference may be made to related content in the first aspect. Details are not described herein again.

With reference to the second aspect, in some implementations of the second aspect, the first information in the at least one data packet in each data packet set in the first PDU set includes a first identifier and/or a first threshold corresponding to a data packet set to which the data packet belongs, and the first identifier indicates a data packet set to which a corresponding data packet belongs.

With reference to the second aspect, in some implementations of the second aspect, that the user plane network element adds the first information to the at least one data packet in each data packet set in the first PDU set includes: The user plane network element adds the first information to each data packet in the first PDU set.

With reference to the second aspect, in some implementations of the second aspect, the first information is carried in an RTP layer or a general packet radio service tunneling protocol-user plane GTP-U layer of the at least one data packet in each data packet set in the first PDU set.

According to a third aspect, a communication method is provided. The method may be performed by an application function. The application function herein may be the application function itself, or may be a processor, a module, a chip, a chip system, or the like that is in the application function and that implements the method. This is not limited in this application. The method includes:

The application function sends first indication information, where the first indication information indicates an access network device to transmit a PDU set based on a transmission parameter of each data packet set in the PDU set and a corresponding first threshold.

With reference to the third aspect, in some implementations of the third aspect, the first indication information includes the first threshold.

With reference to the third aspect, in some implementations of the third aspect, the method further includes: The application function sends second indication information, where the second indication information includes a first quantity, and the first quantity is a quantity of data packets in each data packet set in the PDU set.

With reference to the third aspect, in some implementations of the third aspect, the method further includes: The application function sends third indication information, where the third indication information indicates a redundancy addition mode of at least two data packet sets in the PDU set.

According to a fourth aspect, a communication method is provided. The method may be performed by a policy control function. The policy control function herein may be the policy control function itself, or may be a processor, a module, a chip, a chip system, or the like that is in the policy control function and that implements the method. This is not limited in this application. The method includes:

The policy control function receives fifth indication information, where the fifth indication information includes a redundancy addition mode of at least two data packet sets in each PDU set of a first service.

The policy control function generates sixth indication information based on the fifth indication information, where the sixth indication information indicates to transmit each PDU set of the first service based on a transmission parameter of each data packet set in the PDU set of the first service and a corresponding first threshold.

The policy control function sends the fifth indication information.

With reference to the fourth aspect, in some implementations of the fourth aspect, the fifth indication information further includes a first threshold corresponding to each data packet set in each PDU set of the first service.

With reference to the fourth aspect, in some implementations of the fourth aspect, the fifth indication information further includes a first quantity, and the first quantity is a quantity of data packets in the at least two data packet sets in each PDU set of the first service.

With reference to the fourth aspect, in some implementations of the fourth aspect, the fifth indication information further includes a third quantity, and the third quantity is an upper limit value of data packets, in each data packet in the at least two data packet sets in each PDU set of the first service, that are allowed to be discarded.

With reference to the fourth aspect, in some implementations of the fourth aspect, that the policy control function sends the fifth indication information includes: The policy control function sends the fifth indication information to a session management network element.

According to a fifth aspect, a communication method is provided. The method includes: A user plane network element receives a first PDU set from an application server. The user plane network element adds first information to at least one data packet in each data packet set in the first PDU set, where the first PDU set includes at least two data packet sets, each data packet set includes at least one first data packet and at least one second data packet, the at least one second data packet is a redundant data packet of the at least one first data packet, and the first information indicates a data packet set to which the at least one data packet belongs. The user plane network element sends the first PDU set to an access network device. The access network device receives the first PDU set.

With reference to the fifth aspect, in some implementations of the fifth aspect, the method further includes: The access network device sends the first PDU set when a transmission parameter of each data packet set in the first PDU set is less than a corresponding first threshold; or the access network device discards the first PDU set when a transmission parameter of at least one data packet set in the first PDU set is greater than a corresponding first threshold.

With reference to the fifth aspect, in some implementations of the fifth aspect, the method further includes: A session management network element sends first indication information to the access network device, where the first indication information indicates the access network device to transmit the first PDU set based on the transmission parameter of each data packet set in the first PDU set and the corresponding first threshold. The access network device receives the first indication information.

With reference to the fifth aspect, in some implementations of the fifth aspect, before the user plane network element receives the first PDU set from the application server, the method further includes: The session management network element sends third indication information and/or fourth indication information to the user plane network element, where the third indication information indicates a redundancy addition mode of at least one first data packet set, and the fourth indication information indicates the user plane network element to add the first information to the at least one data packet in each data packet set. The user plane network element receives the third indication information and/or the fourth indication information.

With reference to the fifth aspect, in some implementations of the fifth aspect, the method further includes: The user plane network element adds the first information to the at least one data packet in each data packet set in the first PDU set based on the third indication information and/or the fourth indication information, where the first information indicates the data packet set to which the at least one data packet belongs. The access network device determines the at least two data packet sets in the first PDU set based on the first information carried in the at least one data packet in each data packet set in the first PDU set.

According to a sixth aspect, a communication apparatus is provided. The apparatus includes a transceiver unit and a processing unit. The transceiver unit is configured to receive a first PDU set, where the first PDU set includes at least two data packet sets, each data packet set includes at least one first data packet and at least one second data packet, and the at least one second data packet is a redundant data packet of the at least one first data packet. The processing unit is configured to send, for the access network device, the first PDU set when a transmission parameter of each data packet set in the first PDU set is less than a corresponding first threshold.

It should be understood that the sixth aspect is an apparatus-side implementation corresponding to the first aspect. Supplements, explanations, and descriptions of beneficial effects of the first aspect are also applicable to the sixth aspect. Details are not described again.

According to a seventh aspect, a communication apparatus is provided. The apparatus includes a transceiver unit and a processing unit. The transceiver unit is configured to receive a first PDU set. The processing unit is configured to add first information to at least one data packet in each data packet set in the first PDU set, where the first PDU set includes at least two data packet sets, each data packet set includes at least one first data packet and at least one second data packet, the at least one second data packet is a redundant data packet of the at least one first data packet, and the first information indicates a data packet set to which the at least one data packet belongs. The transceiver unit is further configured to send the first PDU set.

It should be understood that the seventh aspect is an apparatus-side implementation corresponding to the second aspect. Supplements, explanations, and descriptions of beneficial effects of the second aspect are also applicable to the fifth aspect. Details are not described again.

According to an eighth aspect, a communication apparatus is provided. The apparatus includes a transceiver unit. The transceiver unit is configured to send first indication information, where the first indication information indicates an access network device to transmit a PDU set based on a transmission parameter of each data packet set in the PDU set and a corresponding first threshold.

It should be understood that the eighth aspect is an apparatus-side implementation corresponding to the third aspect. Supplements, explanations, and descriptions of beneficial effects of the third aspect are also applicable to the sixth aspect. Details are not described again.

According to a ninth aspect, this application provides a communication apparatus. The communication apparatus includes a processor, configured to implement the method according to any one of the first aspect to the fifth aspect or the implementations of the first aspect to the fifth aspect. The processor is coupled to a memory. The memory is configured to store instructions and data. When the processor executes the instructions stored in the memory, the method according to any one of the first aspect to the fifth aspect or the implementations of the first aspect to the fifth aspect may be implemented.

Optionally, the communication apparatus may further include the memory. Optionally, the memory may be coupled to the processor. Optionally, the communication apparatus may further include a communication interface. The communication interface is used by the apparatus to communicate with another device. For example, the communication interface may be a transceiver, a hardware circuit, a bus, a module, a pin, or another type of communication interface.

In an example, the communication apparatus may be an access network device, or may be an apparatus, a module, a chip, or the like disposed in the access network device, or may be an apparatus that can be used with the access network device.

In another example, the communication apparatus may be a user plane network element, or may be an apparatus, a module, a chip, or the like disposed in the user plane network element, or may be an apparatus that can be used with the user plane network element.

In still another example, the communication apparatus may be an application function, or may be an apparatus, a module, a chip, or the like disposed in the application function, or may be an apparatus that can be used with the application function.

According to a tenth aspect, this application provides a communication system, including: an access network device, configured to perform the method according to any one of the first aspect or the implementations of the first aspect; a user plane network element, configured to perform the method according to any one of the second aspect or the implementations of the second aspect; an application function, configured to perform the method according to any one of the third aspect or the implementations of the third aspect; and a policy control function, configured to perform the method according to any one of the fourth aspect or the implementations of the fourth aspect.

According to an eleventh aspect, this application provides a communication system, including the access network device according to any one of the sixth aspect or the implementations of the sixth aspect, the user plane network element according to any one of the seventh aspect or the implementations of the seventh aspect, and the application function according to any one of the eighth aspect or the implementations of the eighth aspect.

According to a twelfth aspect, this application further provides a computer program. When the computer program is run on a computer, the computer is enabled to perform the method according to any one of the first aspect to the fifth aspect or the implementations of the first aspect to the fifth aspect.

According to a thirteenth aspect, this application further provides a computer program product, including instructions. When the instructions are run on a computer, the computer is enabled to perform the method according to any one of the first aspect to the fifth aspect or the implementations of the first aspect to the fifth aspect.

According to a fourteenth aspect, this application further provides a computer-readable storage medium. The computer-readable storage medium stores a computer program or instructions. When the computer program or the instructions are run on a computer, the computer is enabled to perform the method according to any one of the first aspect to the fifth aspect or the implementations of the first aspect to the fifth aspect.

According to a fifteenth aspect, this application further provides a chip. The chip is configured to read a computer program stored in a memory, to perform the method according to any one of the first aspect to the fifth aspect or the implementations of the first aspect to the fifth aspect; or the chip is configured to perform the method according to any one of the first aspect to the fifth aspect or the implementations of the first aspect to the fifth aspect.

According to a sixteenth aspect, this application further provides a chip system. The chip system includes a processor, configured to support an apparatus in implementing the method according to any one of the first aspect to the fifth aspect or the implementations of the first aspect to the fifth aspect. In a possible design, the chip system further includes a memory, and the memory is configured to store a program and data that are necessary for the apparatus. The chip system may include a chip, or may include a chip and another discrete component.

### BRIEF DESCRIPTION OF DRAWINGS

FIG. 1 is a diagram of a network architecture;
FIG. 2 is a diagram of exclusive OR processing;
FIG. 3 is a diagram of a communication method 300 according to an embodiment of this application;
FIG. 4 is a diagram of an RTP layer header of a data packet;
FIG. 5 is a diagram of a specific implementation process 500 of a communication method 300 according to an embodiment of this application;
FIG. 6 is a diagram of a specific implementation process 600 of a communication method 300 according to an embodiment of this application;
FIG. 7 is a diagram of a specific implementation process 700 of a communication method 300 according to an embodiment of this application;
FIG. 8 is a diagram of a structure of a communication apparatus 1000 according to an embodiment of this application;
FIG. 9 is a diagram of a structure of a communication apparatus 2000 according to an embodiment of this application; and
FIG. 10 is a diagram of a structure of a chip system 3000 according to an embodiment of this application.

### DESCRIPTION OF EMBODIMENTS

The following describes the technical solutions of this application with reference to the accompanying drawings.

For ease of understanding, a communication system to which embodiments of this application may be applied is first described.

Embodiments of this application may be applied to various communication systems, for example, a long term evolution (long term evolution, LTE) system, an LTE frequency division duplex (frequency division duplex, FDD) system, an LTE time division duplex (time division duplex, TDD) system, a public land mobile network (public land mobile network, PLMN), a 5th generation (5th generation, 5G) system, a 6th generation (6th generation, 6G) system, or a future communication system. The 5G system in this application includes a non-standalone (non-standalone, NSA) 5G mobile communication system or a standalone (standalone, SA) 5G mobile communication system. Embodiments of this application may be further applied to a non-terrestrial network (non-terrestrial network, NTN) communication system, for example, a satellite communication system. Embodiments of this application may be further applied to a device-to-device (device-to-device, D2D) communication system, a sidelink (sidelink, SL) communication system, a machine-to-machine (machine-to-machine, M2M) communication system, a machine type communication (machine type communication, MTC) system, an internet of things (Internet of things, IoT) communication system, a vehicle-to-everything (vehicle-to-everything, V2X) communication system, an uncrewed aerial vehicle (uncrewed aerial vehicle, UAV) communication system, or another communication system.

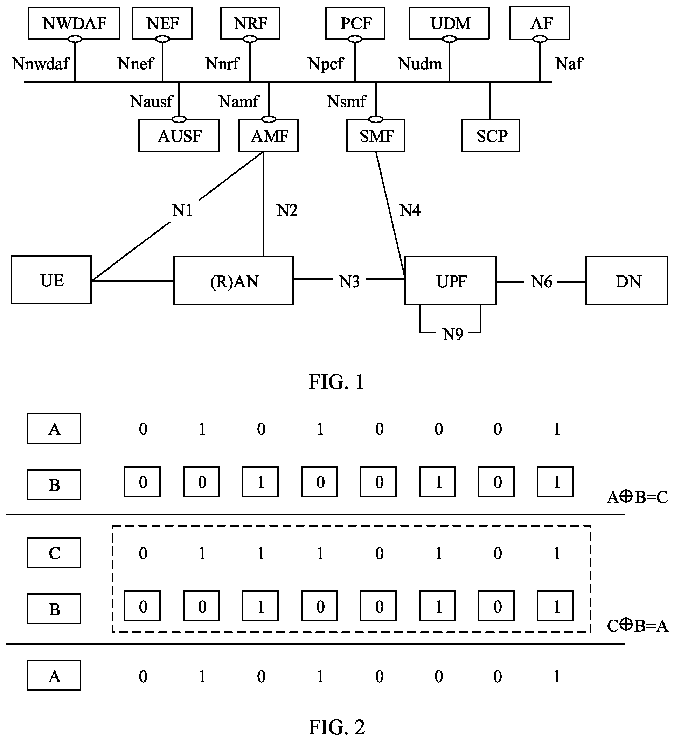

In an example, FIG. 1 is a diagram of a network architecture.

As shown in FIG. 1, a 5G system (the 5th generation system, 5GS) is used as an example of the network architecture. The network architecture may include three parts: a user equipment (user equipment, UE) part, a data network (data network, DN) part, and an operator network part. The operator network may include one or more of the following network elements: a (radio) access network ((radio) access network, (R)AN) device, a user plane function (user plane function, UPF) network element, an authentication server function (authentication server function, AUSF) network element, an access and mobility management function (access and mobility management function, AMF) network element, a session management function (session management function, SMF) network element, a service communication proxy (service communication proxy, SCP) network element, a network data analytics function (network data analytics function, NWDAF) network element, a network exposure function (network exposure function, NEF) network element, a network repository function (network repository function, NRF) network element, a policy control function (policy control function, PCF) network element, a unified data management (unified data management, UDM) network element, and an application function (application function, AF) network element. In the foregoing operator network, parts other than the RAN part may be referred to as a core network part.

In this application, the user equipment, the (radio) access network device, the UPF network element, the AUSF network element, the AMF network element, the SMF network element, the SCP network element, the NWDAF network element, the NEF network element, the NRF network element, the PCF network element, the UDM network element, and the AF network element are respectively referred to as UE, a (R)AN, a UPF, an AUSF, a UDR, an AMF, an SMF, an SCP, an NWDAF, an NEF, an NRF, a PCF, a UDM, and an AF for short.

The following briefly describes the network elements in FIG. 1.

### 1. UE

The UE in this application may also be referred to as a terminal, a user, an access terminal, a subscriber unit, a subscriber station, a mobile station, a mobile console, a remote station, a remote terminal, a mobile device, a user terminal, a terminal device, a wireless communication device, a user agent, a user apparatus, or the like. For ease of description, the UE is uniformly referred to as a terminal below.

The terminal is a device that can access a network. The terminal and the (R)AN may communicate with each other by using an air interface technology (for example, an NR or LTE technology). Terminals may also communicate with each other by using an air interface technology (for example, the NR or LTE technology). The terminal may be a mobile phone (mobile phone), a tablet computer (pad), a computer with a wireless transceiver function, a virtual reality (virtual reality, VR) terminal, an augmented reality (augmented reality, AR) terminal, a terminal in satellite communication, a terminal in an integrated access and backhaul (integrated access and backhaul, IAB) link system, a terminal in a Wi-Fi communication system, a terminal in industrial control (industrial control), a terminal in self-driving (self-driving), a terminal in telemedicine (remote medical), a terminal in a smart grid (smart grid), a terminal in transportation safety (transportation safety), a terminal in a smart city (smart city), a terminal in a smart home (smart home), or the like.

A specific technology and a specific device form that are used by the UE are not limited in embodiments of this application.

### 2. (R)AN

The (R)AN in this application may be a device for communicating with the terminal, or may be a device that connects the terminal to a wireless network.

The (R)AN may be a node in a radio access network. The (R)AN may be a base station (base station), an evolved NodeB (evolved NodeB, eNodeB), a transmission reception point (transmission reception point, TRP), a home base station (for example, a home evolved NodeB, or a home NodeB, HNB), a Wi-Fi access point (access point, AP), a mobile switching center, a next generation NodeB (next generation NodeB, gNB) in a 5G mobile communication system, an access network device in an open radio access network (open radio access network, O-RAN or open RAN), a next-generation base station in a 6th generation (6th generation, 6G) mobile communication system, a base station in a future mobile communication system, or the like. The network device may alternatively be a module or a unit that performs a part of functions of a base station, for example, may be a central unit (central unit, CU), a distributed unit (distributed unit, DU), a remote radio unit (remote radio unit, RRU), or a baseband unit (baseband unit, BBU). The (R)AN may alternatively be a device that performs a function of a base station in a D2D communication system, a V2X communication system, an M2M communication system, and an IoT communication system, or the like. The (R)AN may alternatively be a network device in an NTN. In other words, the (R)AN may be deployed on a high-altitude platform or a satellite. The (R)AN may be a macro base station, or may be a micro base station or an indoor base station, or may be a relay node, a donor node, or the like.

A specific technology, a device form, and a name that are used by the (R)AN are not limited in embodiments of this application. For ease of description, the (R)AN is uniformly referred to as an access network device below.

### 3. UPF

A main function of the UPF includes data packet routing and forwarding, a mobility anchor point, providing support in routing a service flow to a data network through an uplink classifier, supporting a multi-homed PDU session through a branch point, and the like.

### 4. DN

The DN is mainly an operator network for providing a data service for the terminal, for example, the Internet (Internet), a third-party service network, or an IP multimedia service (IP multimedia service, IMS) network.

### 5. AUSF

A main function of the AUSF is to provide an authentication service, supporting 3rd generation partnership project (3rd generation partnership project, 3GPP) and non-3GPP access authentication.

### 6. AMF

A main function of the AMF includes user registration management, reachability detection, SMF node selection, mobile state transition management, and the like.

### 7. SMF

A main function of the SMF is to control session establishment, modification, and deletion, user plane node selection, and the like.

### 8. SCP

The SCP is mainly responsible for indirect communication between a network element and a corresponding network element service.

### 9. NWDAF

A main function of the NWDAF is to provide a network data collection and analysis function based on big data and artificial intelligence technologies and the like.

### 10. NEF

The NEF is mainly configured to securely expose a service and a capability that are provided by a 3GPP network function, and support secure interaction between a 3GPP network and a third-party application.

### 11. NRF

The NRF is mainly configured to store description information of a network function entity, a service provided by the network function entity, and the like.

### 12. PCF

The PCF is mainly responsible for policy control decision-making, providing a policy rule for a control plane function, a traffic-based charging control function, and the like.

### 13. UDM

The UDM is mainly responsible for subscription data management for the terminal, including storage and management of a terminal identifier, access authorization for the terminal, and the like.

### 14. AF

The AF mainly supports interaction with a 3GPP core network to provide a service, for example, affecting data routing decision-making, providing a policy control function, or providing a third-party service for the network. The AF may be an AF deployed on the operator network, or may be a third-party AF.

In the network architecture shown in FIG. 1, the network elements may communicate with each other through interfaces. The interfaces between the network elements may be point-to-point interfaces or service-based interfaces. This is not limited in this application.

It should be understood that the network architecture shown above is merely an example for description, a network architecture to which embodiments of this application are applicable is not limited thereto, and embodiments of this application are applicable to any network architecture that can implement the functions of the network elements.

It should be further understood that the functions or the network elements, such as the AMF, the SMF, the UPF, the PCF, the UDM, the AUSF, the SCP, the NWDAF, the NEF, the NRF, and the AF, shown in FIG. 1 may be understood as network elements for implementing different functions, and for example, may be combined into a network slice as needed. The network elements may be independent devices, or may be integrated into a same device to implement different functions, or may be network elements in a hardware device, or may be software functions running on dedicated hardware, or may be virtualized functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, the terms in 5G may still be used for a part or all of the network elements, or other names may be used.

For ease of understanding the solutions in embodiments of this application, related concepts are described.

### 1. Quality of service flow (Quality of Service flow, QoS flow)

In a 5GS, when having a service communication requirement, UE establishes a protocol data unit (protocol data unit set, PDU) session, and a service flow is specifically carried in a corresponding QoS flow in the PDU session. Specifically, the UE obtains an internet protocol (Internet Protocol, IP) address by establishing the PDU session, to interact with an external service server and implement service communication. The 5GS maps a corresponding service to different QoS flows based on service flow description information, for example, an SDF template, to perform corresponding QoS processing.

### 2. General packet radio service tunneling protocol-user plane (GPRS (General Packet Radio Service) Tunneling Protocol-User Plane, GTP-U)

During establishment of a PDU session, a GTP-U tunnel is used for a connection between a RAN and a UPF. To be specific, data from/to a UE side is added to the tunnel for sending. The GTP-U tunnel is at a PDU session granularity. To be specific, a GTP-U tunnel is established between the RAN and the UPF for each PDU session.

### 3. QoS processing at a PDU set (PDU set) granularity

In an existing quality of service (Quality of Service, QoS) mechanism, service assurance is performed at a data packet granularity. For example, service assurance is performed based on a data packet error rate (packet error rate, PER) and a data packet delay budget (packet delay budget, PDB) in a QoS parameter. Data packets of a service are mapped to a same QoS flow for transmission, and policy-based processing and transmission are performed on the data packets corresponding to the same QoS flow one by one based on a corresponding same QoS parameter. In other words, all of the data packets in the same QoS flow are processed in an equal and non-differentiated manner during transmission.

The PDB identifies a longest delay of transmitting a data packet in a wireless communication network. In other words, the data packet needs to be transmitted to a terminal within duration of the PDB in the wireless communication network. The PDB may include a core network data packet delay budget (core network PDB, CN-PDB) (to be specific, a transmission delay budget between a UPF and an access network device) and an access network data packet delay budget (access network PDB, AN-PDB) (to be specific, a transmission delay budget between the access network device and the terminal). It should be noted that the PDB mentioned in embodiments of this application may be a complete PDB, or may be the AN-PDB or the CN-PDB. This is not limited herein. If transmission duration of a specific data packet exceeds a PDB corresponding to the data packet, the data packet may be discarded. A specific operation depends on an implementation.

In research of an extended reality and media service (extended reality and media service, XRM), a real-time media service, for example, a currently emerging virtual reality (virtual reality, VR), augmented reality (augmented reality, AR), mixed reality (mixed reality, MR), or cloud game service, has a very strict requirement on an end-to-end delay, and data processing is no longer performed at a data packet granularity during encoding and transmission. For example, when service data is encoded at an upper service layer (for example, a media layer) of a transmit end, encoding is usually performed at a media frame or segment granularity. To be specific, a media frame or a segment may be independently encoded. In addition, a receive end of a service also decodes and displays received service data at the same media frame or segment granularity, and a data unit, for example, a media frame or a segment, usually includes a plurality of data packets.

To represent the data unit, for example, the media frame or the segment, the data unit is referred to as a PDU set (PDU set) in a standard, to support data transmission at the media frame or segment granularity at the upper service layer. The PDU set is a basic data unit that can be independently processed at the upper service layer (namely, an application layer). The PDU set may also be referred to as a PDU set, a PDU collection, or the like. For ease of description, the PDU set is uniformly referred to as the PDU set below. For the PDU set, when one or more data packets in the PDU set are lost or damaged, it may be difficult to correctly decode and display the entire PDU set.

Therefore, a QoS processing mechanism at a PDU set granularity is proposed in a current standard. To be specific, a loss rate and a delay requirement at the PDU set granularity are provided. A 5GS identifies a relationship between different data packets and a PDU set, and schedules, processes, and transmits all of data packets in the PDU set as a whole, to ensure service experience of a user. Correspondingly, a manner of processing a PDU set at specific redundancy for a service flow is also mentioned in the standard. To be specific, transmission of the PDU set at limited packet loss is ensured. To determine PDU data packets in a QoS flow that belong to a same PDU set, a 5GC adds PDU set information to a GTP-U layer of a downlink data packet, to help a RAN side identify the PDU set. Specifically, the PDU set information may include a sequence number of the PDU set, indication information of a last PDU data packet in the PDU set, a size of the PDU set, importance of the PDU set, and a sequence number of each PDU data packet in the PDU set.

It should be understood that, when transmission of a data packet fails, it can be considered that when the data packet is transmitted between a RAN and UE, a delay needed for transmitting the data packet exceeds a data packet delay budget of the data packet. In this case, it is also considered that the transmission of the data packet fails. Specifically, an RLC layer has not sent the data packet to a MAC layer in a timely manner for transmission. In this case, if the data packet is still in an RLC buffer after duration of the PDB elapses, it is considered that the data packet has not been scheduled for transmission after the PDB is exceeded, and it is considered that the data packet is lost. Alternatively, there is a feedback mechanism between the RAN and the UE. To be specific, the RAN may determine, based on a feedback of the UE, whether the data packet is successfully transmitted. Specifically, this may be understood as follows: When the data packet is sent to the MAC layer for transmission, the MAC layer determines, based on a HARQ feedback status, whether data is to be finally successfully sent. The MAC layer needs to store a mapping relationship between the data packet and a data block transmitted by the MAC layer (during transmission, the MAC layer may split and reassemble an upper-layer data packet, to ensure that the data packet is suitable for channel transmission), and perform feedback to an upper RLC or PDCP layer, to ensure that an upper layer of the RAN can sense a packet loss status per data packet during scheduling and transmission. Specifically, an implementation finally depends on a base station product.

### 4. Forward error correction (Forward Error Correction, FEC) coding-based redundancy addition scheme

To improve transmission reliability, before sending a corresponding PDU set, a transmit end of a service layer/application layer performs FEC on the current PDU set, to be specific, adds an additional redundant data packet to avoid service experience deterioration caused by packet loss during transmission. An FEC redundancy addition mode specifically depends on an application layer FEC algorithm. Examples are as follows:

Repeated data packets (Redundant packet): Transmission reliability is provided by transmitting a part of data packets. Although the reliability is high, efficiency is very low, greatly increasing transmission pressure.

Unequal importance-based protection: Different protection levels are distinguished based on importance of data, and a redundant data packet may be generated based on an exclusive OR operation. When a data packet is lost, the data packet may be recovered based on the redundant data packet and another data packet. However, if a plurality of data packets among data packets on which a redundancy addition operation is performed are lost, the data packets cannot be recovered.

Flexible FEC: Source data may be dynamically protected based on row/column-based exclusive OR processing, and a redundant data packet of the corresponding row or column is generated. Similarly, after a redundancy addition operation, if a plurality of data packets among data packets on which the redundancy addition operation is performed are lost, the data packets possibly cannot be recovered.

Fountain code (Raptor/RaptorQ): A redundant data packet is generated based on a fountain code Raptor algorithm. A feature lies in that any proportion of data packets that are discarded can be recovered.

Reed-Solomon FEC: A repaired data packet is generated based on a Reed-Solomon algorithm. Any proportion of data packets that are discarded can also be recovered.

Usually, a basic unit for performing an FEC operation is a source block or a symbol, and may be specifically a plurality of data packets. FEC redundancy addition is performed in one basic unit. As shown in FIG. 2, A and B may be a basic unit, and redundancy addition (for example, an exclusive OR operation) is performed on A and B to obtain redundant data C. In this case, when A or B is discarded, the discarded data packet may be recovered by using C. However, if both data packets A and B are lost, A or B cannot be recovered by using C.

Currently, for QoS at a granularity of a PDU set with specific redundancy in a service flow, in one manner, transmission assurance at same redundancy is performed in the current service flow, and a third-party AF sends a redundancy ratio of the corresponding service flow to a network side by interacting with a core network. Then, for integrity transmission of a PDU set in which FEC is used, when transmitting the PDU set, the core network and the network side need to ensure, based on the redundancy ratio, that a specific quantity of PDU data packets in the PDU set can be correctly transmitted, in other words, a transmission failure of specific PDU data packets is allowed.

In another manner, during data transmission, a core network can determine a redundancy ratio of each PDU set based on redundancy information carried in downlink data, and notify a RAN side of a corresponding redundancy ratio at a GTP-U layer of a downlink data packet, to ensure that the RAN side can perform transmission assurance based on the redundancy ratio of the PDU set, to be specific, ensure that a specific quantity of PDU data packets in the PDU set can be correctly transmitted.

However, depending on different FEC implementation algorithms, FEC redundancy addition in a PDU set may not be performed at a PDU set granularity. For example, a redundancy addition operation is performed on one or more data packets in the PDU set. In this case, random packet loss at a specific proportion can be performed only within a range of a group of data packets.

As an example rather than a limitation, the PDU set includes 40 data packets, and an exclusive OR operation is performed on 10 data packets as a group to generate two redundant data packets. In this case, during transmission, it only needs to be ensured that a specific proportion of data packets among 12 data packets (10 raw data packets and two redundant data packets) in each group are successfully transmitted.

Therefore, how to identify an association between a redundant packet in a PDU set and a raw data packet corresponding to the redundant packet to determine a smaller redundancy processing unit and perform corresponding processing is a problem that urgently needs to be resolved.

In view of this, this application provides a communication method and a communication apparatus, to determine, for an FEC implementation algorithm in an XR service, a group processing mechanism in which a data packet in a PDU set can be randomly discarded, to implement integrity transmission of the PDU set.

For ease of understanding embodiments of this application, the following descriptions are provided before embodiments of this application are described.

In this application, "indicate" or "indication" may include a direct indication and an indirect indication, in other words, "indicate" or "indication" may be an explicit indication and/or an implicit indication. For example, a piece of information being described as indicating information I may include that the information directly indicates I or indirectly indicates I, but does not necessarily indicate that the information carries I. For another example, the implicit indication may be based on a location and/or a resource used for transmission; and the explicit indication may be based on one or more parameters, and/or one or more indexes, and/or one or more bit patterns represented by the explicit indication.

Definitions listed for many features in this application are merely examples for explaining functions of the features. For detailed content, refer to the conventional technology.

In the following embodiments, first, second, third, fourth, and various numerals are merely intended for differentiation for ease of description, but not to limit the scope of embodiments of this application. For example, the terms are intended to distinguish between different fields and different information.

"Predefine" may be implemented by prestoring corresponding code or a corresponding table on a device, or may be implemented in another manner of indicating related information. A specific implementation is not limited in this application. "Store" may mean being stored in one or more memories. A type of the memory may be a storage medium in any form. This is not limited in this application.

A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

In this application, aspects, embodiments, or features are presented based on a system including a plurality of devices, components, modules, or the like. It should be appreciated and understood that each system may include another device, component, module, or the like, and/or may not include all of devices, components, modules, or the like discussed with reference to the accompanying drawings. In addition, a combination of these solutions may alternatively be used.

In embodiments of this application, the term "example", "for example", "in an example", or "as an (another) example" is used to give an example, an illustration, or a description. Any embodiment or design scheme described as an "example" in this application should not be construed as being more preferred or advantageous than another embodiment or design scheme. To be precise, the term example is intended to present a concept in a specific manner.

The terms "include", "comprise", "have", and their variants all mean "including but not limited to", unless otherwise specifically emphasized in another manner.

"At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be in a singular form or a plural form. The character "/" usually indicates an "or" relationship between the associated objects. "At least one of the following items (pieces)" or a similar expression thereof indicates any combination of the items, including one of the items (pieces) or any combination of a plurality of the items (pieces). For example, at least one of a, b, and c may indicate a, b, c, a and b, a and c, b and c, or a, b, and c. a, b, and c each may be in a singular form or a plural form.

In embodiments of this application, related descriptions of sending a message, information, or data by a network element A to a network element B and receiving the message, the information, or the data by the network element B from the network element A are intended to describe a network element to which the message, the information, or the data is to be sent. Whether the message, the information, or the data is directly sent or indirectly sent through another network element is not limited.

In embodiments of this application, all of the descriptions "when", "in a case that", "if", and the like mean that a device performs corresponding processing in an objective case, but are not intended to limit time. In addition, the descriptions do not necessarily mean that the device needs to perform a determining action during implementation, and do not mean any other limitation either.

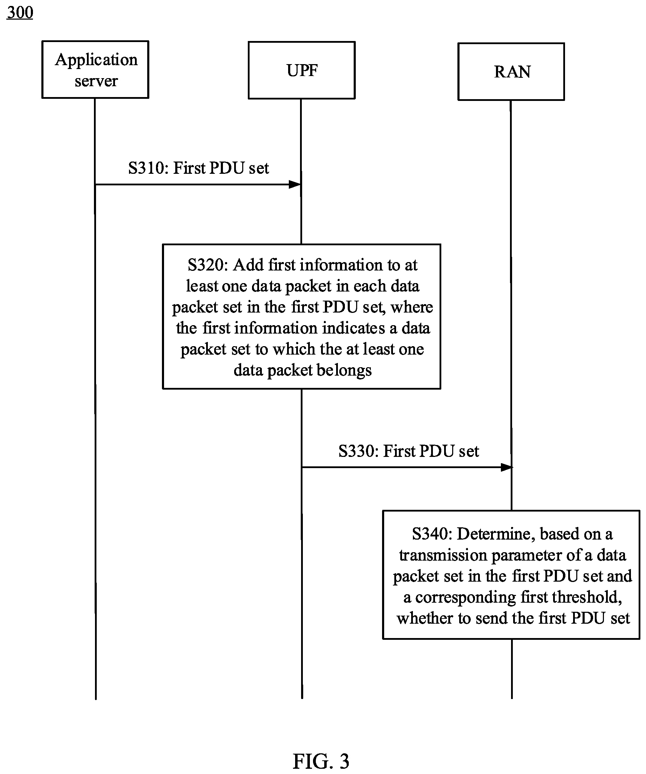

FIG. 3 is a diagram of a communication method 300 according to an embodiment of this application. As shown in the figure, the method 300 includes the following steps.

S310: An application server sends a first PDU set to a UPF, and correspondingly, the UPF receives the first PDU set. The first PDU set includes at least two data packet sets. Each data packet set includes at least one first data packet and at least one second data packet. The at least one second data packet is a redundant data packet of the at least one first data packet.

It should be understood that, in this embodiment of this application, the data packet set may be understood as a group of data packets obtained through a redundancy addition operation during FEC. The data packet set includes a redundant data packet. Specifically, the redundant data packet may be a data packet obtained through a redundancy addition operation, or may be a retransmitted data packet of a raw data packet. For example, the data packet set may include a raw data packet on which an exclusive OR operation is performed and a redundant data packet generated based on the exclusive OR operation.

It should be understood that the at least one second data packet being a redundant data packet of the at least one first data packet may also be understood as that the at least one second data packet is a redundant data packet in the data packet set. The redundant data packet may be a data packet obtained through a redundancy addition operation, or may be a retransmitted data packet of a raw data packet. In addition, the at least one first data packet may be a raw data packet, or may be a data packet obtained through processing (for example, negation) by the application server. This is not limited in this embodiment of this application.

S320: The UPF sends the first PDU set to a RAN, and correspondingly, the RAN receives the first PDU set.

Specifically, before the UPF sends the first PDU set to the RAN, the UPF determines that downlink data packets belong to a same PDU set, and adds PDU set information to GTP-U layers of the downlink data packets. The PDU set information includes at least one of the following: a sequence number of the PDU set, an indication of a last PDU data packet in the PDU set, importance of the PDU set, an order of PDUs in the PDU set, and/or a size of the PDU set.

Optionally, before step S320, the method 300 further includes the following step.

S315: The UPF adds first information to at least one data packet in each data packet set in the first PDU set, where the first information indicates a data packet set to which a corresponding data packet belongs.

The first information added to the data packet includes at least one of a first identifier or a first threshold. The first identifier is an identifier of a data packet set to which the data packet belongs. To be specific, the first identifier is used to identify the data packet set to which the data packet belongs, or is used for an access network device to determine the at least two data packet sets in the first PDU set based on the first identifier. The first threshold is a redundancy threshold that the data packet set to which the data packet belongs needs to meet during transmission. To be specific, a packet loss rate or a quantity of lost packets during transmission of the data packet set to which the data packet belongs needs to be less than or equal to the redundancy threshold.

It should be understood that a specific manner of indicating the first threshold is not limited in this embodiment of this application.

For example, the first threshold may be indicated in a form of a quantity, and indicates an upper limit value of data packets, in each data packet set, that are allowed to be discarded during transmission.

It should be understood that the discarded data packets may be data packets lost when the first PDU set is received or data packets that fail to be sent when the first PDU set is sent, or include both a data packet lost when the first PDU set is received and a data packet that fails to be sent when the first PDU set is sent.

For example, the first threshold may be indicated in a form of redundancy, and indicates an upper limit value of a proportion of data packets, in each data packet set, that are allowed to be discarded during transmission, or a lower limit value of a proportion of data packets, in each data packet set, whose transmission needs to be guaranteed during transmission, or a lower limit value of a proportion of data packets, in each data packet set, for which successful transmission needs to be guaranteed during transmission. This is not limited herein.

It should be understood that first thresholds corresponding to all data packet sets in the first PDU set may be the same or different. This is not limited in this embodiment of this application. The first threshold may be sent by any one of an AF, an SMF, and a PCF to the UPF, or may be locally configured by the UPF, or may be determined by the UPF based on related information in a data packet in the first PDU set. A specific manner is described in detail below, and details are not described herein.

As an example rather than a limitation, the first PDU set includes three data packet sets, where both a first threshold corresponding to a data packet set #1 and a first threshold corresponding to a data packet set #2 are 10%, and a first threshold corresponding to a data packet set #3 is 15%.

For example, the first identifier may be Set#1, Set#2, Set#3, ..., or may be a data packet set start indication and/or a data packet set end indication. This is not limited herein.

It is easily understood that, before adding the first information, the UPF needs to determine the at least two data packet sets in the first PDU set and/or a first threshold corresponding to each data packet set.

First, a specific manner of determining, by the UPF, the at least two data packet sets in the first PDU set is described.

In a possible implementation, a manner of determining, by the UPF, the at least two data packet sets in the PDU set depends on an implementation of the UPF.

In a possible implementation, the UPF determines the at least two data packet sets based on a first quantity or a second quantity and a data packet sequence number (for example, a PDU SN number) in a received downlink data packet. The first quantity is a quantity of data packets in a data packet set. Usually, in a same PDU set, quantities of data packets in data packet sets in the PDU set other than a last data packet set are the same. The second quantity is a quantity of data packet sets included in the first PDU set.

As an example rather than a limitation, a PDU set 1 includes 20 data packets, and the first quantity is 5. To be specific, each data packet set includes five data packets. In this case, data packets with sequence numbers 1 to 5 are a data packet set #1, data packets with sequence numbers 6 to 10 are a data packet set #2, data packets with sequence numbers 11 to 15 are a data packet set #3, and data packets with sequence numbers 16 to 20 are a data packet set #4.

As an example rather than a limitation, a PDU set 1 includes 18 data packets, and the first quantity is 5. To be specific, each data packet set includes five data packets. In this case, data packets with sequence numbers 1 to 5 are a data packet set #1, data packets with sequence numbers 6 to 10 are a data packet set #2, data packets with sequence numbers 11 to 15 are a data packet set #3, and data packets with sequence numbers 16 to 18 are a data packet set #4.

As an example rather than a limitation, a PDU set 2 includes 20 data packets, and the second quantity is 4. To be specific, the PDU set 2 includes four data packet sets. In this case, data packets with sequence numbers 1 to 5 are a data packet set #1, data packets with sequence numbers 6 to 10 are a data packet set #2, data packets with sequence numbers 11 to 15 are a data packet set #3, and data packets with sequence numbers 16 to 20 are a data packet set #4.

It should be understood that the foregoing process of determining, by the UPF, the at least two data packet sets in the first PDU set is performed after the UPF determines a PDU sequence number in the PDU set. For example, the UPF determines a PDU data packet set sequence number in the PDU set based on a sequence number in an RTP data packet header; or the UPF determines a PDU data packet sequence number in the PDU set in an RTP data packet extension header as a PDU data packet sequence number in the PDU set.

It should be understood that the first quantity or the second quantity may be locally configured by the UPF, or the first quantity or the second quantity may be sent by the SMF, the PCF, or the AF to the UPF, or may be preconfigured by the SMF or the PCF. As an example rather than a limitation, in step S310, the UPF receives second indication information from the SMF, where the second indication information indicates the first quantity or the second quantity. To be specific, the second indication information is used for the UPF to determine the at least two data packet sets in the PDU set.

In another possible implementation, the UPF determines the at least two data packet sets in the first PDU set based on second information in at least one data packet in the first PDU set.

The second information is used to determine the at least two data packet sets in the first PDU set. To be specific, the UPF determines the at least two data packet sets in the first PDU set based on the second information in the at least one data packet in the first PDU set.

Alternatively, the UPF may determine the at least two data packet sets in the first PDU set based on second information in each data packet in the first PDU set. To be specific, the second information may be carried in the data packet in the PDU set.

In addition, the second information further indicates the at least one first data packet and the at least one second data packet in each data packet set. To be specific, the UPF may determine the at least one first data packet and the at least one second data packet in each data packet set based on the second information. Specifically, the UPF may determine the at least two data packet sets in the PDU set and the at least one first data packet and the at least one second data packet in each data packet set based on the second information.

It should be understood that a specific location of the second information is not limited in this embodiment of this application. In an example, the second information is included in an RTP layer of each data packet, and may be specifically included in an RTP data packet header or an RTP extension header. In another example, the second information is included in a GTP-U layer of each data packet. An example in which the second information is at the RTP layer is used for description.

It should be understood that a manner of triggering the UPF to detect the second information carried in each data packet is not limited in this embodiment of this application.

As an example rather than a limitation, after receiving a downlink data packet, the UPF may detect the second information carried in each data packet.

As an example rather than a limitation, the UPF may receive third indication information from the session management network element SMF side. The third indication information indicates the UPF to determine the at least two data packet sets in the PDU set based on the second information carried in each data packet after receiving the downlink data packet. The third indication information may alternatively indicate an FEC redundancy addition scheme used for a current service flow. To be specific, a 5G system (5G system, 5GS), for example, the UPF, can determine the at least two data packet sets in the PDU set based on the FEC redundancy addition scheme. In addition, the UPF can determine the at least one first data packet and the at least one second data packet in each data packet set based on the FEC redundancy addition scheme.

For example, if the third indication information indicates that an FEC redundancy addition scheme currently used for the service flow is flexible FEC or an FEC redundancy addition scheme used for the service flow complies with RFC 8672, the UPF detects the second information based on an RTP data packet format corresponding to the flexible FEC or the RFC 8672, to be specific, determines the at least two data packet sets in the PDU set based on second information carried in an RTP data packet, where the RFC 8672 is a standard protocol for the flexible FEC.

In addition, the UPF correspondingly determines first information corresponding to the data packet.

For example, when the third indication information indicates that an FEC redundancy addition scheme used for a service flow corresponding to the first PDU set is flexible FEC, the UPF may determine, based on an FEC header at an RTP layer of a data packet in the flexible FEC scheme, first information corresponding to the data packet.

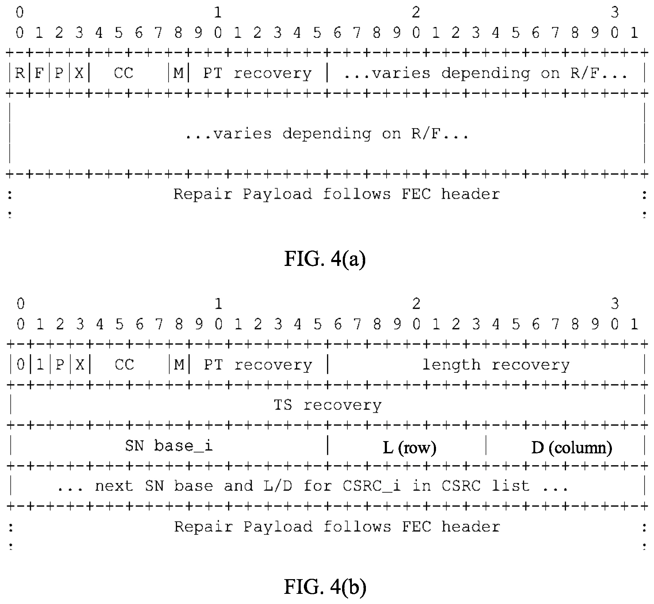

FIG. 4 is a diagram of an RTP layer header of a data packet.

As shown in FIG. 4(a), in an FEC header, R=0 and F=0 indicate that a mask is used for identification, to be specific, a data packet protected by a current redundant data packet is dynamically indicated by information in a data packet header; R=0 and F=1 indicate that a row/column-based exclusive OR operation is used for processing; R=1 and F=0 identify retransmission, to be specific, a current data packet is a retransmitted data packet of a target data packet; and R=1 and F=1 are currently reserved for future use.

When R=0 and F=1, as shown in FIG. 4(b), a quantity L of rows and a quantity D of columns are subsequently included, where SN base_i is a sequence number of a 1^{st} data packet in the data packet set. If L=1 and D=5, an exclusive OR operation is performed on every five data packets to generate one redundant data packet. In this case, every six data packets are a data packet set, and one data packet (or X=16.67%) in the data packet set is allowed to be discarded, that is, the first threshold is 1 or 16.67%. To be specific, in this implementation, the UPF may determine, based on the second information, the at least two data packet sets in the first PDU set and/or the first threshold corresponding to each data packet set. In this example, the second information is R/F/L/D and SN base_i.

It should be understood that the third indication information may be sent by any one of the SMF, the PCF, and the AF to the UPF. This is not limited in this embodiment of this application.

In the foregoing manner, the UPF may determine the at least two data packet sets in the first PDU set. The following describes a specific manner of determining, by the UPF, the first threshold corresponding to each data packet set.

In a possible implementation, before receiving a downlink data packet, the UPF receives configuration information from the SMF or the AF, and the configuration information further includes the first threshold.

In another possible implementation, the UPF may determine, based on the second information, the first threshold corresponding to each data packet in the first PDU set.

In still another possible implementation, a local configuration of the UPF includes a first threshold of a service corresponding to the first PDU set. In this implementation, all data packet sets in the first PDU set correspond to a same first threshold.

Further, after determining first information corresponding to a data packet, the UPF adds the first information to at least one data packet in each data packet set in each PDU set.

It should be understood that a specific quantity of pieces of first information added by the UPF to each data packet set is not limited in this embodiment of this application.

For example, the UPF adds the first information to each data packet in each data packet set. In this case, the first information is used to identify a data packet set to which the data packet belongs.

For example, the UPF adds the first information to a 1^{st} data packet or a last data packet in each data packet set. In this case, the first information may identify a 1^{st} packet and/or a last packet in a data packet set to which a current data packet belongs.

It should be understood that a specific manner of adding, by the UPF, the first information to a data packet is not limited in this embodiment of this application. In an example, the UPF adds the first information to a GTP-U layer of a data packet, to be specific, adds the first information to a GTP-U layer of a downlink data packet. In another example, the UPF adds the first information to an RTP layer of a data packet, to be specific, adds the first information to an RTP layer header or an RTP layer extension header of a downlink data packet.

It should be understood that a trigger condition for adding, by the UPF, the first information to a data packet is not limited in this embodiment of this application.

For example, the UPF adds the first information to a data packet based on an indication of the third indication information or fourth indication information. The fourth indication information indicates the UPF to add the first information to the at least one data packet in each data packet set.

It should be understood that the UPF receives the fourth indication information before receiving a downlink data packet. The fourth indication information is from the SMF, the PCF, or the AF. This is not limited in this embodiment of this application.

For example, the UPF adds the first information to the at least one data packet in each data packet set based on a local configuration.

In a possible implementation, the first information is the same as the second information. Specifically, the UPF can extract the second information, and add the second information to a GTP-U layer of a data packet. To be specific, in this implementation, the second information, instead of the first identifier and the first threshold, serves as the first information. Correspondingly, the RAN side determines the at least two data packet sets in the first PDU set based on the second information.

S330: The RAN determines, based on a transmission parameter of a data packet set in the first PDU set and a corresponding first threshold, whether to send the first PDU set.

It should be understood that, before performing step S330, the RAN needs to first determine the at least two data packet sets in the first PDU set and the first threshold corresponding to each data packet set.

It should be understood that a specific manner of determining, by the RAN, the at least two data packet sets in the first PDU set is not limited in this embodiment of this application.

In a possible implementation, the RAN may determine the at least two data packet sets in the first PDU set based on the first quantity or the second quantity. For a specific manner, refer to related descriptions of step S320. Details are not described herein again.

For example, the RAN determines the at least two data packet sets in the first PDU set based on the first quantity or the second quantity and a PDU sequence number in the PDU set at a GTP-U layer of a downlink data packet. To be specific, a sequence number of each data packet in the first PDU set is a PDU sequence number in the PDU set.

The first threshold corresponding to each data packet set in the first PDU set may be preconfigured on the RAN side, or may be from the SMF side or the UPF side.

In another possible implementation, the RAN may determine the at least two data packet sets in the first PDU set based on the second information carried in each data packet in the first PDU set. For a specific manner, refer to related descriptions of step S320. Details are not described herein again.

In another possible implementation, the RAN may determine a first threshold of the at least two data packet sets in the first PDU set based on the second information carried in each data packet in the first PDU set. The first threshold may remain the same or vary for the at least two data packet sets in the first PDU set.

In still another possible implementation, the RAN may determine the at least two data packet sets in the first PDU set based on the first information carried in the at least one data packet in each data packet set in the first PDU set. Optionally, the first information carried in the at least one data packet in each data packet set in the first PDU set is added by the UPF.

In a possible implementation, the first information may be carried in at least one data packet in the first PDU set. For example, the first PDU set includes data packet sets #1, #2, #3, and #4, where at least one data packet in #1 carries the first information, and at least one data packet in #3 carries the first information. Therefore, the RAN may determine the data packet sets #1, #2, #3, and #4 included in the first PDU set.

Specifically, the RAN can determine the at least two data packet sets in the first PDU set based on the first identifier included in the first information.

It should be understood that, that the RAN sends the first PDU set based on the transmission parameter of each data packet set in the first PDU set and the corresponding first threshold may be understood as follows: sending the first PDU set when the transmission parameter of each data packet set in the first PDU set is less than or equal to the corresponding first threshold; or discarding the first PDU set when a transmission parameter of any data packet set in the first PDU set is greater than a corresponding first threshold; or during transmission of each data packet set in the first PDU set, ensuring that the transmission parameter of each data packet set in the first PDU set is less than or equal to the corresponding first threshold.

It should be understood that the transmission parameter may be understood as a quantity or a proportion of lost data packets in each data packet set in a process in which the RAN receives the first PDU set (that is, a quantity of lost packets or a packet loss rate), or a quantity or a proportion of data packets that fail to be sent in each data packet set in a process in which the RAN sends the first PDU set.

Alternatively, the transmission parameter may be understood as a quantity or a proportion of lost data packets in each data packet set in a process in which the RAN receives the first PDU set and data packets that fail to be sent in each data packet set in a process in which the RAN sends the first PDU set (that is, a quantity of lost packets or a packet loss rate). To be specific, the proportion of data packets includes a lost data packet in each data packet set in the process in which the RAN receives the first PDU set and a data packet that fails to be sent in each data packet set in the process in which the RAN sends the first PDU set.

It is easily understood that, when the RAN determines, in a process of receiving the first PDU set, that a transmission parameter of any data packet set in the first PDU set is greater than a corresponding first threshold, the RAN may discard a data packet in the first PDU set; or when the RAN determines, in a process of sending the first PDU set, that a transmission parameter of any data packet set in the first PDU set is greater than a corresponding first threshold, the RAN discards a to-be-transmitted data packet in the first PDU set.

As an example rather than a limitation, the first threshold is 10%. When receiving a PDU set 1 from the UPF, the RAN finds that a packet loss rate of a data packet set #2 in the PDU set 1 reaches 10%. In this case, the RAN discards a received data packet in the PDU set 1.

As an example rather than a limitation, the first threshold is 10%. When sending a PDU set 2 to UE, the RAN finds that a packet loss rate of a data packet set #3 in the PDU set 2 reaches 10%. In this case, the RAN stops sending the PDU set 2, and discards an unsent data packet in the PDU set 2.

Optionally, the RAN allocates sufficient resources to the to-be-transmitted data packet in the first PDU set, to ensure that a data packet set to which the to-be-transmitted data packet in the first PDU set belongs can be less than or equal to a corresponding first threshold during subsequent transmission, to ensure integrity transmission of the first PDU set. To be specific, when a transmission parameter of any data packet set in the first PDU set is less than or equal to a corresponding first threshold and is greater than a corresponding second threshold, the RAN schedules sufficient network resources for a to-be-transmitted data packet in the first PDU set, to ensure integrity transmission of the first PDU set.

For example, the RAN allocates a first network resource to the to-be-transmitted data packet in the first PDU set. The first network resource is used to ensure that the data packet set to which the to-be-transmitted data packet in the first PDU set belongs can be less than or equal to the corresponding first threshold during subsequent transmission, to ensure integrity transmission of the first PDU set. It is easily understood that a quantity of data packets that can be carried in the first network resource is greater than or equal to a quantity of to-be-transmitted data packets in the first PDU set.

It should be understood that a specific value of the second threshold is not limited in this embodiment of this application. For example, the second threshold is 0. To be specific, when finding that packet loss occurs during transmission of any data packet set in the first PDU set, the RAN allocates a first time-frequency resource to the first PDU set, to ensure integrity transmission of the first PDU set.

It should be understood that second thresholds corresponding to all data packet sets in the first PDU set may be the same or different. This is not limited in this embodiment of this application.

It should be understood that, for a manner of determining a second threshold corresponding to each data packet set, reference may be made to a manner of determining the first threshold corresponding to each data packet set. This is not limited in this embodiment of this application.

It should be understood that a trigger condition for performing step S330 by the RAN is not limited in this embodiment of this application.

For example, the RAN determines, based on an indication of first indication information and the transmission parameter of each data packet set in the first PDU set, whether to send the first PDU set. The first indication information indicates the RAN to: when receiving a PDU set of a specific service flow, determine, based on a transmission parameter of each data packet set in each PDU set and a corresponding first threshold, whether to send the PDU set.

It should be understood that, in this implementation, the RAN receives the first indication information before step S310. The first indication information is from the UPF, the SMF, the PCF, or the AF. This is not limited in this embodiment of this application.

For example, the RAN performs step S330 based on a local configuration.

According to the foregoing solution, during transmission of a PDU set, redundancy-based integrity transmission is performed for at least two data packet sets in the PDU set, to ensure correct transmission of the data packet sets when transmission of a specific quantity of data packets fails.

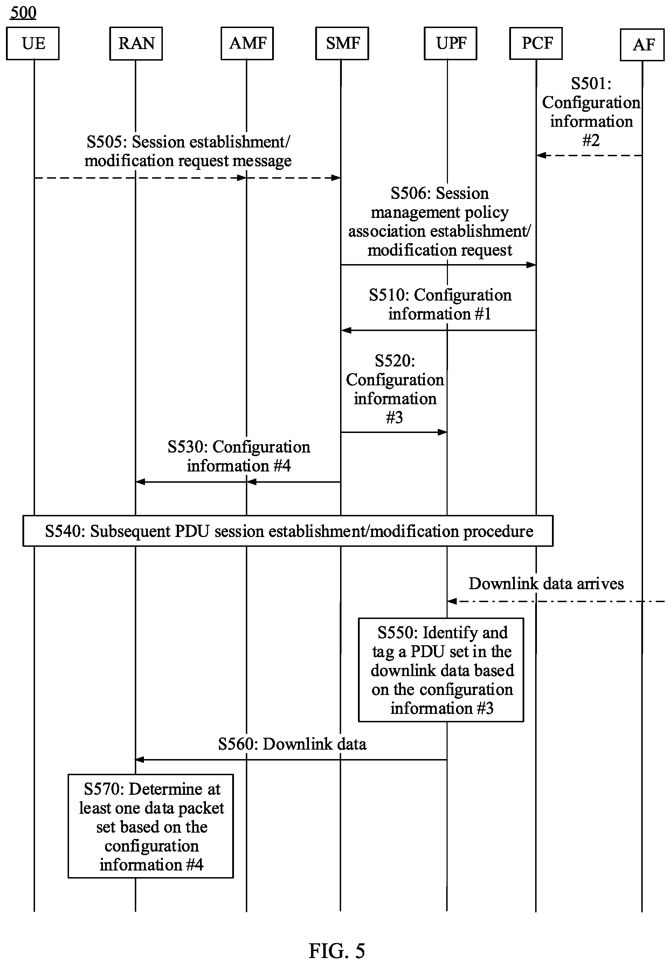

The following describes a specific application scenario of the method 300 with reference to FIG. 5 to FIG. 7.

FIG. 5 is a diagram of a specific implementation process 500 of the communication method 300 according to an embodiment of this application. As shown in the figure, the process 500 includes the following steps.

S510: A PCF sends configuration information #1 to an SMF, and correspondingly, the SMF receives the configuration information #1.

Specifically, the configuration information #1 indicates a PDU set processing rule, and the configuration information #1 includes indication information #1 and/or indication information #2. The indication information #1 indicates to perform redundancy-based integrity transmission of a PDU set, to be specific, indicates to transmit the first PDU set based on transmission parameters of at least two data packet sets in the PDU set and a corresponding first threshold. The indication information #2 indicates a size (namely, a first quantity) of an associated group. The associated group (namely, a data packet set) is a set of data packets, in the PDU set, on which an FEC redundancy implementation algorithm (for example, an exclusive OR operation) is performed. In other words, the associated group is a set of raw data packets, in the PDU set, on which an FEC redundancy implementation algorithm is performed and generated redundant data packets.

It should be understood that the size of the associated group is a fixed size obtained after a redundancy addition operation is performed during FEC. For example, the associated group may include a raw data packet on which an exclusive OR operation is performed and a redundant data packet generated based on the exclusive OR operation.

It should be noted that, in this embodiment of this application, the associated group is merely an example name, and may also be referred to as a block (Block), a packet (Packet), a symbol (symbol), or the like. This is not limited in this application.

Optionally, the PDU processing rule further includes a first threshold, and the first threshold is a redundancy threshold for performing integrity transmission of each associated group in the PDU set. Specifically, during transmission, a transmission parameter (for example, a packet loss rate or a quantity of lost packets) of each associated group is not greater than the first threshold. To be specific, a transmission parameter of each data packet set in the PDU set is not greater than the first threshold.

It should be understood that, before the PCF sends the configuration information #1 to the SMF, the PCF needs to determine the PDU set processing rule. A specific manner of determining the PDU set processing rule by the PCF is not limited in this embodiment of this application.

In a possible implementation, the PCF determines the PDU set processing rule based on a local configuration. The local configuration includes the size of the associated group or a size of the data packet set and/or an FEC redundancy addition scheme. The FEC redundancy addition scheme indicates an FEC redundancy addition scheme used for a same service flow, so that a 5GS, for example, a UPF, can perform redundancy-based PDU set transmission based on the FEC redundancy addition scheme. Specifically, the method may include: determining the at least two data packet sets in the PDU set based on the FEC redundancy addition scheme. In addition, at least one first data packet and at least one second data packet in each data packet set in the PDU set may be further determined based on the FEC redundancy addition scheme.

In another possible implementation, before step S510, the method 500 further includes the following step.

S501: An AF sends configuration information #2 to the PCF, and correspondingly, the PCF receives the configuration information #2.

Specifically, the AF sends the configuration information #2 to the PCF based on a capability exposure interface. For example, the configuration information #2 is carried in an AF request (AF Request) message. The configuration information #2 indicates the PCF to perform redundancy-based PDU set processing for the service flow. The configuration information #2 includes the FEC redundancy addition scheme and/or the size of the associated group (namely, the size of the data packet set).

It should be understood that the configuration information #2 further includes service flow description information, for example, an IP 3-tuple or an IP 5-tuple, to identify the service flow.

It should be understood that a specific manner of sending, by the AF, the configuration information #2 to the PCF is not limited in this embodiment of this application.

In an example, the AF is in a trusted domain, and the AF may directly interact with the PCF. Specifically, the AF may interact with the PCF by invoking a service interface (for example, an Npcf_PolicyAuthorization service interface) of the PCF.

In another example, the AF is in an untrusted domain, and the AF needs to interact with the PCF through an NEF (not shown in the figure). Specifically, the AF invokes a service interface (for example, an Nnef_AFSessionWithQoS service interface) of the NEF to interact with the NEF, and then the NEF correspondingly invokes a service interface of the PCF to interact with the PCF.

It should be understood that a manner of triggering step S510 is not limited in this application.

In a possible implementation, in step S510, the PCF may actively perform sending to the SMF. In this case, the configuration information #1 may be included in a session management policy modification (SM Policy Association_Update) message.

In another possible implementation, step S510 is triggered based on a request message sent by the SMF to the PCF. In this case, the configuration information #1 may be included in a session management policy modification message or a session management policy association (SM Policy Association_Create) message. In this implementation, the method 500 further includes the following steps.

S505: UE sends a session establishment request message or a session modification request message to the SMF. The session in this application may be a PDU session or a session in another form. The PDU session is used as an example for description in subsequent embodiments.

Optionally, the UE sends a PDU session establishment or modification request (PDU Session Establishment/Modification Request) message to an AMF, and the AMF forwards the PDU session establishment or modification request message to the SMF.

S506: The SMF sends a session management policy association establishment/modification request message to the PCF.

Specifically, in response to the PDU session establishment or modification request message, the AMF requests, from the PCF, a processing rule for a PDU set corresponding to the PDU session.

According to step S510, the SMF can obtain the FEC redundancy addition scheme and/or the size of the associated group (namely, the data packet set). Further, the SMF performs the following steps.

S520: The SMF sends configuration information #3 to the UPF, and correspondingly, the UPF receives the configuration information #3.

Specifically, the SMF sends the configuration information #3 to the UPF through an N4 session establishment or modification procedure. The configuration information #3 includes PDU set tag indication information. The PDU set tag indication information indicates to determine that downlink data packets belong to a same PDU set and add PDU set information to GTP-U layers of the downlink data packets.

The PDU set information includes at least one of the following: a sequence number of the PDU set, an indication of a last PDU data packet in the PDU set, importance of the PDU set, an order of PDUs in the PDU set, and/or a size of the PDU set.

In some possible implementations, the configuration information #3 further includes indication information #3, and the indication information #3 indicates to: when a quantity of lost data packets in any associated group (or data packet set) in a received PDU set exceeds the first threshold, discard the entire PDU set.

It should be understood that the configuration information #3 includes the indication information #2, so that the UPF can determine the size of the associated group based on the indication information #2.

Optionally, the configuration information #3 includes indication information #7, and the indication information #7 indicates the UPF to determine at least two associated groups (data packet sets) in the PDU set and add identifiers of the associated groups and an identifier of the first threshold to at least one data packet in the PDU set.

It should be understood that a specific manner of determining the first threshold by the UPF is not limited in this embodiment of this application.

For example, the first threshold is locally configured for the UPF, so that the UPF can determine the first threshold based on the local configuration.

For example, the configuration information #3 includes the first threshold. In this case, the UPF may determine the first threshold based on the configuration information #3.

S530: The SMF sends configuration information #4 to a RAN, and correspondingly, the RAN receives the configuration information #4.

Specifically, the SMF sends the configuration information #4 to the RAN side through the AMF based on the configuration information #2. The configuration information #4 includes indication information #4. The indication information #4 indicates the RAN to determine an associated group in the PDU set and perform, in the associated group, integrity transmission of the PDU set corresponding to the first threshold, or indicates the RAN to transmit the PDU set based on transmission parameters of the at least two associated groups in the PDU set and a corresponding first threshold.

It should be understood that the integrity transmission of the PDU set corresponding to the first threshold may be understood as follows: The RAN ensures, through resource scheduling, that data packets that fail to be transmitted in each associated group of the PDU set are less than the first threshold during actual transmission. If the RAN determines that any associated group (data packet set) in a received PDU set exceeds the first threshold, the RAN discards the PDU set or a to-be-transmitted data packet in the PDU set. Alternatively, when a transmission parameter of each associated group in the first PDU set is less than or equal to a corresponding first threshold, the RAN sends the first PDU set. Alternatively, during transmission of each associated group in the first PDU set, the RAN ensures that a transmission parameter of each data packet set in the first PDU set is less than or equal to a corresponding first threshold.

It should be understood that the first threshold may be indicated in a form of a quantity, and indicates an upper limit value of data packets, in each data packet set, that are allowed to be discarded during transmission. The discarded data packets may be data packets lost when the first PDU set is received or data packets that fail to be sent when the first PDU set is sent, or include both a data packet lost when the first PDU set is received and a data packet that fails to be sent when the first PDU set is sent.

Optionally, the configuration information #4 further includes the indication information #2, so that the RAN can determine each associated group in the PDU set based on the indication information #2.

S540: Perform a subsequent PDU session establishment/modification procedure. For a specific procedure, refer to an existing standard. Details are not described herein again.

After downlink data of the PDU session arrives at the UPF, the method 500 further includes the following steps.

S550: The UPF identifies and tags a PDU set in the downlink data based on the configuration information #3.

Specifically, the UPF identifies, based on the PDU set tag indication information in the configuration information #3, that PDU data packets in the downlink data belong to a same PDU set, and adds PDU set information to GTP-U layers of downlink data packets.

It should be understood that, when the configuration information #3 includes the indication information #4, the UPF further determines at least one associated group in a same PDU set based on the indication information #4. Specifically, the UPF determines the at least one associated group in the PDU set based on a PDU SN and the size of the associated group.

As an example rather than a limitation, a PDU set 1 includes 20 data packets, and the indication information #4 indicates that the size of the associated group is five data packets. In this case, data packets with sequence numbers 1 to 5 are an associated group #1, data packets with sequence numbers 6 to 10 are an associated group #2, data packets with sequence numbers 11 to 15 are an associated group #3, and data packets with sequence numbers 16 to 20 are an associated group #4.

Optionally, the UPF determines, based on the first threshold, whether to discard the PDU set.

As an example rather than a limitation, the first threshold is 20%. When receiving a data packet in a PDU set 2, the UPF finds that a packet loss rate of an associated group #1 in the PDU set 2 reaches 20%. In this case, the UPF discards a to-be-transmitted data packet in the PDU set 2.

As an example rather than a limitation, the first threshold is 10%. When sending an associated group #2 among five associated groups in a PDU set 3, the UPF finds that a packet loss rate of the associated group #2 reaches 10%. In this case, the UPF discards a to-be-transmitted data packet in the PDU set 3.

Optionally, when the configuration information #3 includes the indication information #7, after determining the at least one associated group in the PDU set, the UPF adds a corresponding associated group identifier and/or first threshold to a GTP-U layer of a data packet.

S560: The UPF sends downlink data to the RAN. The downlink data is downlink data to which the UPF has added a PDU set tag.

S570: The RAN determines at least one associated group based on the configuration information #4.

Specifically, the RAN determines at least one associated group in a same PDU set based on the size of the associated group that is indicated by the configuration information #4. For a specific process, refer to step S550. Details are not described herein again.

Optionally, the RAN determines the at least one associated group based on the associated group identifier at the GTP-U layer of the data packet.

Further, the RAN determines a relationship between a transmission status of each associated group and the first threshold.

In a possible implementation, when the RAN determines that a quantity of lost packets in each associated group in a same PDU set is less than the first threshold, the RAN sends a data packet in the PDU set to the UE side through a Uu interface.

It should be understood that, when the RAN sends the data packet in the PDU set to the UE, if a quantity of lost packets in an associated group is greater than the first threshold, the RAN discards all to-be-transmitted data packets in the PDU set.

As an example rather than a limitation, the RAN sends a data packet in a PDU set 3 to the UE, where the PDU set 3 includes 30 data packets, and each associated group includes 10 data packets. When sending data packets in an associated group #1, the RAN finds that three of eight sent data packets are discarded, and the first threshold is 20%. That is, a packet loss rate of the associated group #1 is greater than the first threshold. In this case, the RAN stops sending, and discards remaining data packets in the PDU set 3, including two unsent data packets in the FEC associated group #1 and all data packets in an associated group #2 and an associated group #3.

In another possible implementation, when the RAN determines that a quantity of lost packets in at least one associated group in a same PDU set is greater than the first threshold, the RAN discards to-be-transmitted data in the PDU set.

It should be understood that, when the configuration information #4 does not include the first threshold, the first threshold may be preconfigured.

It should be understood that, when the configuration information #4 does not include the first threshold, the RAN side may further preconfigure a threshold of a quantity of lost packets for each associated group. For example, the RAN side preconfigures the threshold of the quantity of lost packets as one data packet. To be specific, the RAN side considers by default that a maximum of one data packet in each associated group is to be discarded during transmission.

According to the foregoing solution, the PCF configures a fixed size of an associated group, to assist the RAN side in performing redundancy-based integrity transmission of a PDU set for each associated group and discarding the entire PDU set after lost data packets or data packets that fail to be transmitted in an associated group reach redundancy.

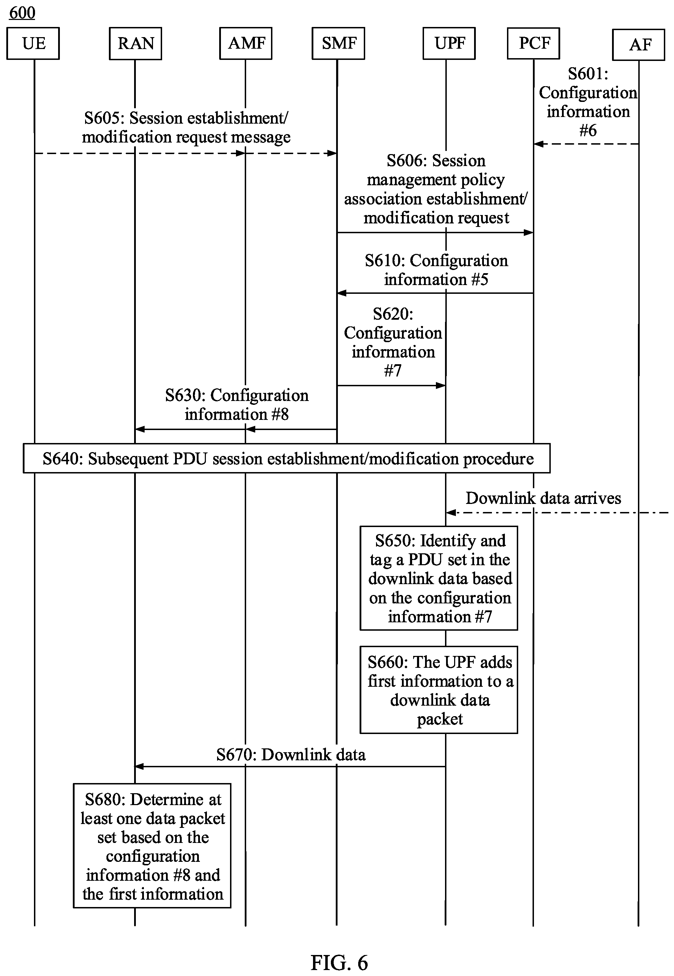

FIG. 6 is a diagram of a specific implementation process 600 of the communication method 300 according to an embodiment of this application. As shown in the figure, the method 600 includes the following steps.

S610: A PCF sends configuration information #5 to an SMF, and correspondingly, the SMF receives the configuration information #5.

Specifically, the configuration information #5 indicates a PDU set processing rule, and the configuration information #5 includes indication information #5 and/or indication information #6. The indication information #5 indicates to perform redundancy-based integrity transmission of a PDU set, to be specific, indicates to transmit the first PDU set based on transmission parameters of at least two data packet sets in the PDU set and a corresponding first threshold. The indication information #6 indicates an FEC redundancy addition scheme corresponding to the PDU set.

It should be understood that the FEC redundancy addition scheme corresponding to the PDU set may be understood as an FEC redundancy addition mode for a data packet in the PDU set.

It should be understood that an FEC scheme corresponding to the PDU set is not limited in this embodiment of this application. An example in which the FEC scheme corresponding to the PDU set is flexible FEC is used below for description.

It should be understood that, before the PCF sends the configuration information #5 to the SMF, the PCF needs to determine the PDU set processing rule. A specific manner of determining the PDU set processing rule by the PCF is not limited in this embodiment of this application.

In a possible implementation, the PCF determines the PDU processing rule based on a local configuration. The local configuration includes an FEC redundancy addition scheme. The FEC redundancy addition scheme indicates an FEC redundancy addition scheme (for example, the flexible FEC) used for a same service flow, so that a 5GS can perform redundancy-based PDU set transmission based on the FEC redundancy addition scheme. Specifically, the method may include: determining at least two associated groups (namely, data packet sets) in the PDU set based on the FEC redundancy addition scheme. In addition, at least one first data packet and at least one second data packet in each associated group in the PDU set may be further determined based on the FEC redundancy addition scheme. The first data packet is a raw data packet or a raw data packet obtained through processing by an application server. The second data packet is a redundant data packet.

In another possible implementation, before step S610, the method 600 further includes the following step.

S601: An AF sends configuration information #6 to the PCF, and correspondingly, the PCF receives the configuration information #6.

Specifically, the AF sends the configuration information #6 to the PCF based on a capability exposure interface. The configuration information #6 indicates the PCF to perform redundancy-based PDU set processing for the service flow. The configuration information #6 includes the FEC redundancy addition scheme.

It should be understood that the configuration information #6 further includes service flow description information, for example, an IP 3-tuple or an IP 5-tuple, to identify the service flow.

It should be understood that, in this embodiment of this application, for a specific manner of sending, by the AF, the configuration information #6 to the PCF, reference may be made to step S501. Details are not described herein again.

Optionally, the configuration information #5 further includes a first threshold. The first threshold may be indicated in a form of a quantity, and indicates an upper limit value of data packets, in each associated group, that are allowed to be discarded during transmission. Alternatively, the first threshold may be indicated in a form of redundancy, and indicates a proportion of data packets, in each associated group, that are allowed to be discarded during transmission. This is not limited in this embodiment of this application.

It should be understood that a specific manner of determining the first threshold by the PCF is not limited in this embodiment of this application.

In a possible implementation, the first threshold is included in the configuration information #6. To be specific, the first threshold is provided by the AF for the PCF.

In another possible implementation, the first threshold is locally configured by the PCF.

It should be understood that a manner of triggering step S610 is not limited in this application. For specific descriptions, refer to step S505 and step S506. Details are not described herein again.

S620: The SMF sends configuration information #7 to a UPF, and correspondingly, the UPF receives the configuration information #7.

Specifically, the SMF sends the configuration information #7 to the UPF through an N4 session establishment or modification procedure. The configuration information #7 includes PDU set tag indication information. The PDU set tag indication information indicates to determine that downlink data packets belong to a same PDU set and add PDU set information to GTP-U layers of the downlink data packets.

The PDU set information includes at least one of the following: a sequence number of the PDU set, an indication of a last PDU data packet in the PDU set, importance of the PDU set, an order of PDUs in the PDU set, and/or a size of the PDU set.

In this embodiment of this application, the configuration information #7 further includes at least one of the indication information #6 and indication information #7. The indication information #7 indicates to add an identifier of an associated group and an identifier of the first threshold to at least one data packet in the PDU set.

It should be understood that, when the configuration information #7 includes at least one of the indication information #6 and the indication information #7, the UPF determines an associated group in the PDU set based on the indication information #6 and information in an RTP layer header of a downlink data packet, and correspondingly adds identification information to at least one data packet in the PDU set. The identification information is used to identify an associated group in the PDU set.

Optionally, the configuration information #7 includes the first threshold.

It should be understood that, when the configuration information #7 does not include the first threshold, the UPF may determine the first threshold based on an indication of the indication information #6 and an RTP layer of the downlink data packet.

The indication information #6 may be protocol description information, and describes a transmission protocol used for the service flow and a corresponding FEC redundancy addition scheme, to assist the UPF in determining the associated group and/or the first threshold based on the protocol description information.

Optionally, the configuration information #7 further includes indication information #8, and the indication information #8 indicates to: when a quantity of lost data packets in an associated group in the PDU set exceeds the first threshold, discard the entire PDU set.

S630: The SMF sends configuration information #8 to a RAN, and correspondingly, the RAN receives the configuration information #8.

Specifically, the SMF sends the configuration information #8 to the RAN through an AMF based on the configuration information #5. The configuration information #8 includes indication information #8. The indication information #8 indicates the RAN to transmit the PDU set based on a transmission parameter of the associated group in the PDU set and the first threshold, and specifically indicates the RAN to determine the associated group in the PDU set and the first threshold and perform corresponding integrity transmission of the PDU set in the associated group based on the first threshold, or indicates the RAN to transmit the PDU set based on transmission parameters of the at least two associated groups in the PDU set and a corresponding first threshold.

It should be understood that, for specific descriptions of integrity transmission of the PDU set corresponding to the first threshold, reference may be made to related content in step S530. Details are not described herein again.

Optionally, the configuration information #8 further includes the first threshold, so that the RAN can obtain the first threshold based on the configuration information #8 before receiving downlink data.

It should be understood that, for specific descriptions of integrity transmission of the foregoing response, reference may be made to related content in step S530. Details are not described herein again.

S640: Perform a subsequent PDU session establishment/modification procedure. For a specific procedure, refer to an existing standard. Details are not described herein again.

After downlink data of the PDU session arrives at the UPF, the method 600 further includes the following steps.

S650: The UPF adds corresponding PDU set information to a downlink data packet based on the configuration information #7.

Specifically, the UPF identifies, based on the PDU set tag indication information in the configuration information #7, that PDU data packets in the downlink data belong to a same PDU set, and adds PDU set information to GTP-U layers of downlink data packets.

It should be understood that the UPF further determines at least one associated group in a same PDU set based on the configuration information #7. Specifically, the UPF determines the at least one associated group in the PDU set based on at least one of the indication information #6 and the indication information #7 and information in an RTP layer header of the downlink data packet, and correspondingly adds identification information for identifying the associated group to a GTP-U layer of the downlink data packet.

It should be understood that, when the configuration information #8 does not include the first threshold, the RAN can determine the first threshold based on information at an RTP layer of a data packet, and correspondingly add the first threshold to the GTP-U layer of the downlink data packet.

S660: The UPF adds first information to the downlink data packet, where the first information includes an associated group identifier and/or the first threshold. Data packets with a same associated group identifier belong to a same associated group.

Optionally, the UPF may determine, based on the first threshold, whether to discard the PDU set. For a specific manner, refer to step S550. Details are not described herein again.

S670: The UPF sends downlink data to the RAN.

It should be understood that the downlink data is downlink data to which the UPF has added a PDU set identifier and the associated group identifier.

S680: The RAN determines the at least one associated group in the PDU set based on the configuration information #8 and the first information.

Specifically, the RAN determines the at least one associated group in the PDU set and/or the first threshold based on the indication information #8 and the first information.

It should be understood that the first threshold can be included in the first information, or the first threshold can be included in the configuration information #8, or the first threshold can be locally configured by the RAN. This is not limited in this embodiment of this application.

Further, based on the first threshold carried in the downlink data packet, the RAN performs integrity transmission of the PDU set based on the first threshold for each associated group.

In a possible implementation, when the RAN determines that a quantity of lost packets in each associated group in a same PDU set is less than the first threshold, the RAN sends a data packet in the PDU set to the UE side through a Uu interface.

It should be understood that, when the RAN sends the data packet in the PDU set to the UE, if a quantity of lost packets or a packet loss rate of an associated group is greater than the first threshold, the RAN discards all to-be-transmitted data packets in the PDU set.

As an example rather than a limitation, the RAN sends a data packet in a PDU set 3 to the UE, where the PDU set 3 includes 30 data packets, and each associated group includes 10 data packets. When sending data packets in an associated group #1, the RAN finds three of eight sent data packets is discarded, and the first threshold is 20%. That is, a packet loss rate of the associated group #3 is greater than the first threshold. In this case, the RAN stops sending, and discards remaining data packets in the PDU set 3, including two unsent data packets in the FEC associated group #1 and all data packets in an associated group #2 and an associated group #3.

In another possible implementation, when the RAN determines that a quantity of lost packets or a packet loss rate of at least one associated group in a same PDU set is greater than the first threshold, the RAN discards to-be-transmitted data in the PDU set.

In another possible implementation, the RAN ensures that a quantity of lost packets or a packet loss rate of each associated group in the PDU set is less than or equal to the first threshold.

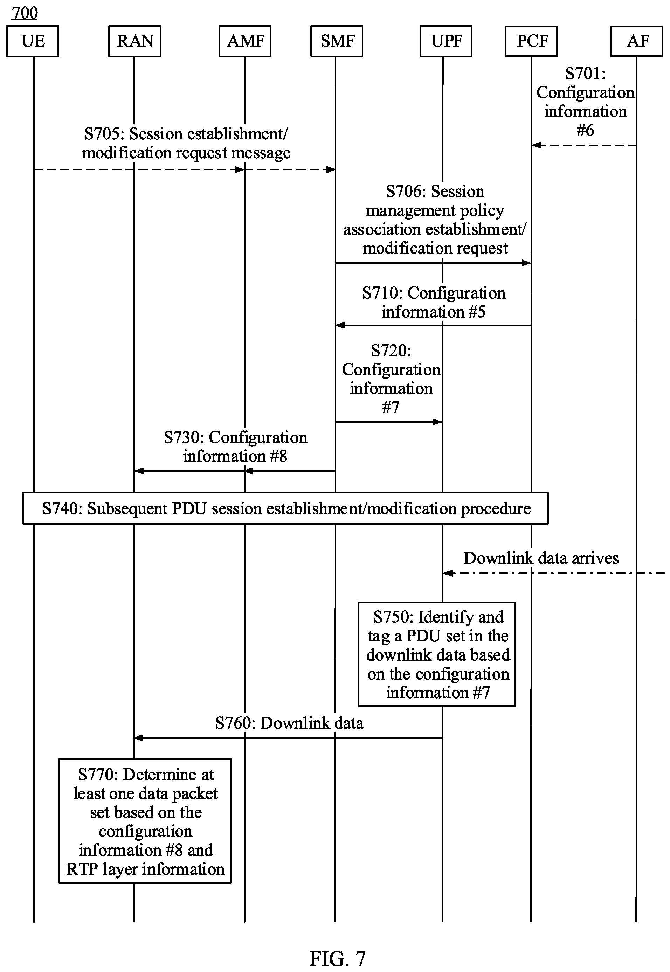

FIG. 7 is a diagram of a specific implementation process 700 of the communication method 300 according to an embodiment of this application. As shown in the figure, the process 700 includes the following steps.

S710: A PCF sends configuration information #5 to an SMF, and correspondingly, the SMF receives the configuration information #5.

Specifically, the configuration information #5 indicates a PDU set processing rule, and the configuration information #5 includes indication information #5 and/or indication information #6. The indication information #5 indicates to perform redundancy-based integrity transmission of a PDU set, to be specific, indicates to transmit the first PDU set based on transmission parameters of at least two data packet sets in the PDU set and a corresponding first threshold. The indication information #6 indicates an FEC redundancy addition scheme corresponding to the PDU set.

It should be understood that, for a specific manner of the configuration information #5, reference may be made to related content in step S610. Details are not described herein again.

It should be understood that, before the PCF sends the configuration information #5 to the SMF, the PCF needs to determine the PDU set processing rule. A specific manner of determining the PDU set processing rule by the PCF is not limited in this embodiment of this application.

In another possible implementation, before step S710, the method 700 further includes the following step.

S701: An AF sends configuration information #6 to the PCF, and correspondingly, the PCF receives the configuration information #6.

It should be understood that, for specific descriptions of the configuration information #6, reference may be made to related content in step S601. Details are not described herein again.

S720: The SMF sends configuration information #7 to a UPF, and correspondingly, the UPF receives the configuration information #7.

Specifically, the SMF sends the configuration information #7 to the UPF side through an N4 session establishment or modification procedure. The configuration information #7 includes PDU set tag indication information. The PDU set tag indication information indicates to determine that downlink data packets belong to a same PDU set and add PDU set information to GTP-U layers of the downlink data packets.

S730: The SMF sends configuration information #8 to a RAN, and correspondingly, the RAN receives the configuration information #8.

Specifically, the SMF sends the configuration information #8 to the RAN through an AMF based on the configuration information #5. The configuration information #8 includes the indication information #6 and/or indication information #8. The indication information #8 indicates the RAN to transmit the PDU set based on a transmission parameter of an associated group in the PDU set and a first threshold, and specifically indicates the RAN to determine the associated group in the PDU set and the first threshold and perform corresponding integrity transmission of the PDU set in the associated group based on the first threshold.

Optionally, the configuration information #8 includes the first threshold. Optionally, the indication information #6 may alternatively be preconfigured on the RAN side.

S740: Perform a subsequent PDU session establishment/modification procedure. For a specific procedure, refer to an existing standard. Details are not described herein again.

After downlink data of the PDU session arrives at the UPF, the method 700 further includes the following steps.

S750: The UPF identifies and tags a PDU set in the downlink data based on the configuration information #7.

Specifically, the UPF identifies, based on the PDU set tag indication information in the configuration information #7, that PDU data packets in the downlink data belong to a same PDU set, and adds PDU set information to GTP-U layers of downlink data packets. The PDU set information includes at least one of the following: a sequence number of the PDU set, an indication of a last PDU data packet in the PDU set, importance of the PDU set, an order of PDUs in the PDU set, and/or a size of the PDU set.

S760: The UPF sends downlink data to the RAN.

It should be understood that the downlink data is downlink data to which the UPF has added a PDU set tag.

S770: The RAN determines at least one associated group in the PDU set based on the configuration information #8 and RTP layer information.

Specifically, the RAN determines the at least one associated group in the PDU set based on the indication information #6 and information at an RTP layer of a downlink data packet.

It should be understood that, when the configuration information #8 does not include the first threshold, the RAN can determine the first threshold based on information at an RTP layer of a data packet.

It should be understood that, for a manner of determining, by the RAN, the at least one associated group in the PDU set and the first threshold based on the RTP layer, reference may be made to related descriptions of FIG. 5. Details are not described herein again.

Further, based on the first threshold carried in the downlink data packet, the RAN performs integrity transmission of the PDU set based on the first threshold for each associated group.

According to the foregoing solution, the RAN may determine an associated group in the PDU set and redundancy in the associated group based on the RTP layer of the downlink data packet, to perform redundancy-based integrity transmission of the PDU set for each associated group. In addition, after data packets that fail to be received or sent in an associated group in the PDU set reach redundancy, a to-be-transmitted data packet in the PDU set is discarded.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

It should be further understood that, in some of the foregoing embodiments, a device in an existing network architecture is mainly used as an example for description. It should be understood that a specific form of the device is not limited in embodiments of this application. For example, embodiments of this application are applicable to all future devices that can implement a same function.

It can be understood that methods and operations implemented by a device (for example, the access network device and the core network device) in the foregoing method embodiments may alternatively be implemented by a component (for example, a chip or a circuit) of the device.

It can be further understood that some optional features in embodiments of this application may be independent of other features in some scenarios, or may be combined with other features in some scenarios. This is not limited.

The communication method provided in embodiments of this application is described above in detail with reference to FIG. 3 to FIG. 7. The communication method is mainly described from a perspective of interaction between the access network device and the core network device. It can be understood that, to implement the foregoing functions, the terminal device, the access network device, and the core network device include corresponding hardware structures and/or software modules for performing the functions.

A person skilled in the art may be aware that units and algorithm steps in examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application. However, the implementation still falls within the scope of this application.

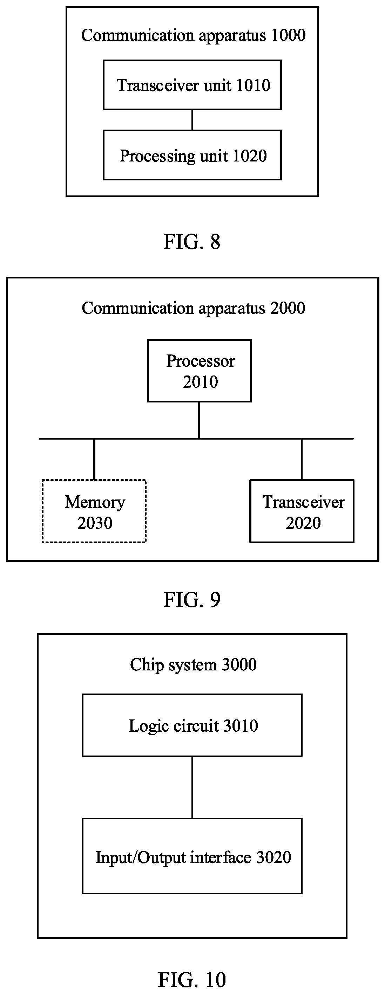

The following describes in detail a communication apparatus provided in embodiments of this application with reference to FIG. 8 to FIG. 10. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, the access network device and the core network device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that division into the modules in embodiments of this application is an example, and is merely logical function division. During actual implementation, another division manner may be used. An example in which each functional module is obtained through division based on a corresponding function is used below for description.

FIG. 8 is a diagram of a structure of a communication apparatus 1000 according to an embodiment of this application. As shown in FIG. 8, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement the steps or the processes performed by the core network device (for example, the SMF, the UPF, or the PCF) in the foregoing method embodiments. The processing unit 1020 is configured to perform a processing-related operation of the core network device in the foregoing method embodiments. The transceiver unit 1010 is configured to perform a sending/receiving-related operation of the core network device in the foregoing method embodiments.

As an example rather than a limitation, the apparatus 1000 may be configured to perform the actions performed by the user plane network element in the foregoing method embodiments.

Specifically, the transceiver unit 1010 is configured to receive a first PDU set, where the first PDU set includes at least two data packet sets, each data packet set includes at least one first data packet and at least one second data packet, and the at least one second data packet is a redundant data packet of the at least one first data packet; and the processing unit 1020 is configured to send, for the access network device, the first PDU set when a transmission parameter of each data packet set in the first PDU set is less than a corresponding first threshold.

In another possible design, the apparatus 1000 may implement the steps or the processes performed by the access network device in the foregoing method embodiments. The transceiver unit 1010 is configured to perform a sending/receiving-related operation of the access network device in the foregoing method embodiments. The processing unit 1020 is configured to perform a processing-related operation of the access network device in the foregoing method embodiments.

As an example rather than a limitation, the transceiver unit 1010 is configured to receive a first PDU set; the processing unit 1020 is configured to add first information to at least one data packet in each data packet set in the first PDU set, where the first PDU set includes at least two data packet sets, each data packet set includes at least one first data packet and at least one second data packet, the at least one second data packet is a redundant data packet set of the at least one first data packet, and the first information indicates a data packet set to which the at least one data packet belongs; and the transceiver unit 1010 is further configured to send the first PDU set.

It should be understood that the apparatus 1000 herein is embodied in a form of a functional unit. The term "unit" herein may indicate an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described functions. In an optional example, a person skilled in the art can understand that the apparatus 1000 may be specifically the transmit end in the foregoing embodiments, and may be configured to perform the processes and/or the steps corresponding to the transmit end in the foregoing method embodiments. Alternatively, the apparatus 1000 may be specifically the receive end in the foregoing embodiments, and may be configured to perform the processes and/or the steps corresponding to the receive end in the foregoing method embodiments. To avoid repetition, details are not described herein again.

The apparatus 1000 in the foregoing solutions has a function of implementing corresponding steps performed by the transmit end in the foregoing methods, or the apparatus 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform sending/receiving operations and related processing operations in the method embodiments.

In addition, the transceiver unit may alternatively be a transceiver circuit (for example, may include a receiver circuit and a transmitter circuit), and the processing unit may be a processing circuit. In this embodiment of this application, the apparatus 1000 may be the receiving device or the sending device in the foregoing embodiments, or may be a chip or a chip system, for example, a system-on-a-chip (system-on-a-chip, SoC), in the receiving device or the sending device. The transceiver unit may be an input/output circuit or a communication interface. The processing unit is a processor, a microprocessor, or an integrated circuit that is integrated in the chip. This is not limited herein.

FIG. 9 is a diagram of a structure of a communication apparatus 2000 according to an embodiment of this application. As shown in FIG. 9, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement the processes and the steps corresponding to the core network device (for example, the SMF, the UPF, or the PCF) in the foregoing method embodiments.

In another possible implementation, the apparatus 2000 is configured to implement the processes and the steps corresponding to the access network device in the foregoing method embodiments.

It should be understood that the apparatus 2000 may be specifically the transmit end or the receive end in the foregoing embodiments, or may be a chip or a chip system. Correspondingly, the transceiver 2020 may be a transceiver circuit of the chip. This is not limited herein. Specifically, the apparatus 2000 may be configured to perform the steps and/or the processes corresponding to the transmit end or the receive end in the foregoing method embodiments.

Optionally, the memory 2030 may include a read-only memory and a random access memory, and provide instructions and data for the processor. A part of the memory may further include a nonvolatile random access memory. For example, the memory may further store information about a device type. The processor 2010 may be configured to execute the instructions stored in the memory. When the processor 2010 executes the instructions stored in the memory, the processor 2010 is configured to perform the steps and/or the processes in the method embodiments corresponding to the transmit end or the receive end.

During implementation, the steps of the foregoing methods may be performed by a hardware integrated logic circuit in the processor or instructions in a form of software. The steps of the methods disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and performs the steps of the foregoing methods based on hardware of the processor. To avoid repetition, details are not described herein again.

It should be noted that the processor in embodiments of this application may be an integrated circuit chip and has a signal processing capability. During implementation, the steps in the foregoing method embodiments may be performed by a hardware integrated logic circuit in the processor or instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and performs the steps of the foregoing methods based on hardware of the processor.

It can be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. By way of example but not limitative description, RAMs in many forms may be used, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory in the systems and the methods described in this specification is intended to include but is not limited to these memories and any other appropriate type of memory.

FIG. 10 is a diagram of a structure of a chip system 3000 according to an embodiment of this application. As shown in FIG. 10, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, to enable the chip system 3000 to implement the methods and the functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement the operations performed by the core network device (for example, the SMF, the UPF, or the PCF) in the foregoing method embodiments.

In a solution, the chip system 3000 is configured to implement the operations performed by the access network device in the foregoing method embodiments.

An embodiment of this application further provides a computer-readable storage medium. The computer-readable storage medium stores computer instructions for implementing the method performed by the core network device (for example, the SMF, the UPF, or the PCF) or the access network device in the foregoing method embodiments.

An embodiment of this application further provides a computer program product, including computer program code or instructions. When the computer program code or the instructions are run on a computer, the computer is enabled to implement the method performed by the core network device (for example, the SMF, the UPF, or the PCF) or the access network device in the foregoing method embodiments.

An embodiment of this application further provides a communication system, including the core network device (for example, the SMF, the UPF, or the PCF) and the access network device.

For descriptions of related content and beneficial effects of any one of the apparatuses provided above, refer to a corresponding method embodiment provided above. Details are not described herein again.

A person of ordinary skill in the art may be aware that units and algorithm steps in examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application. However, it should not be considered that the implementation goes beyond the scope of this application.

It can be clearly understood by a person skilled in the art that, for ease and brevity of description, for detailed working processes of the foregoing systems, apparatuses, and units, reference may be made to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk drive, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by an access network device, a first protocol data unit PDU set, wherein the first PDU set comprises at least two data packet sets, each data packet set comprises at least one first data packet and at least one second data packet, and the at least one second data packet is a redundant data packet of the at least one first data packet; and
sending, by the access network device, the first PDU set when a transmission parameter of each data packet set in the first PDU set is less than a corresponding first threshold.

2. The method according to claim 1, wherein the transmission parameter of each data packet set in the first PDU set comprises a packet loss rate or a quantity of lost packets of the data packet set.

3. The method according to claim 1 or 2, wherein sending, by the access network device, the first PDU set comprises:
ensuring, by the access network device, that the transmission parameter of each data packet set in the first PDU set is less than or equal to the corresponding first threshold.

4. The method according to any one of claims 1 to 3, wherein the method further comprises:
discarding, by the access network device, the first PDU set when a transmission parameter of at least one data packet set in the first PDU set is greater than a corresponding first threshold.

5. The method according to claim 4, wherein discarding, by the access network device, the first PDU set comprises:
discarding, by the access network device, a to-be-transmitted data packet in the first PDU set.

6. The method according to any one of claims 1 to 5, wherein all data packet sets in the first PDU set correspond to a same first threshold, or all data packet sets in the first PDU set correspond to different first thresholds.

7. The method according to any one of claims 1 to 6, wherein before receiving, by the access network device, the first PDU set, the method further comprises:
receiving, by the access network device, first indication information, wherein the first indication information indicates the access network device to transmit the first PDU set based on the transmission parameter of each data packet set in the first PDU set and the corresponding first threshold.

8. The method according to claim 7, wherein a first threshold corresponding to each data packet set in the first PDU set is comprised in the first indication information.

9. The method according to any one of claims 1 to 8, wherein before sending, by the access network device, the first PDU set, the method further comprises:
determining, by the access network device, the at least two data packet sets in the first PDU set.

10. The method according to claim 9, wherein determining, by the access network device, the at least two data packet sets in the first PDU set comprises:
determining, by the access network device, the at least two data packet sets in the first PDU set based on a first quantity and a sequence number of each data packet in the first PDU set, wherein the first quantity is a quantity of data packets in a data packet set in the first PDU set.

11. The method according to claim 10, wherein before determining, by the access network device, the at least two data packet sets in the first PDU set based on the first quantity and a sequence number of at least one data packet in the first PDU set, the method further comprises:
receiving, by the access network device, second indication information, wherein the second indication information indicates the first quantity, and the second indication information is from a session management network element, or the second indication information is from a user plane function network element.

12. The method according to claim 9, wherein determining, by the access network device, the at least two data packet sets in the first PDU set comprises:
determining, by the access network device, the at least two data packet sets in the first PDU set based on first information carried in at least one data packet in each data packet set in the first PDU set, wherein the first information comprises a first identifier, and the first identifier indicates a data packet set to which a corresponding data packet belongs.

13. The method according to claim 12, wherein the first information further comprises a first threshold corresponding to the data packet set to which the corresponding data packet belongs.

14. The method according to claim 12 or 13, wherein the first information is carried in a general packet radio service tunneling protocol-user plane GTP-U layer or a real-time communication protocol RTP layer of at least one data packet in the first PDU set.

15. The method according to any one of claims 12 to 14, wherein determining, by the access network device, the at least two data packet sets in the first PDU set based on the first information carried in the at least one data packet in each data packet set in the first PDU set comprises:
receiving, by the access network device, third indication information, wherein the third indication information indicates a redundancy addition mode of the at least two data packet sets in the first PDU set; and
determining, by the access network device based on the third indication information and the first information carried in the at least one data packet in each data packet set in the first PDU set, the at least two data packet sets in the first PDU set and/or the first threshold corresponding to each data packet set.

16. A communication method, comprising:
receiving, by a user plane network element, a first PDU set;
adding, by the user plane network element, first information to at least one data packet in each data packet set in the first PDU set, wherein the first PDU set comprises at least two data packet sets, each data packet set comprises at least one first data packet and at least one second data packet, the at least one second data packet is a redundant data packet of the at least one first data packet, and the first information indicates a data packet set to which the at least one data packet belongs; and
sending, by the user plane device, the first PDU set.

17. The method according to claim 16, wherein before receiving, by the user plane network element, the first PDU set, the method further comprises:
receiving, by the user plane network element, third indication information and/or fourth indication information, wherein the third indication information indicates a redundancy addition mode of the at least one first data packet set, and the fourth indication information indicates the user plane network element to add the first information to the at least one data packet in each data packet set; and
adding, by the user plane network element, the first information to the at least one data packet in each data packet set in the first PDU set based on the third indication information and/or the fourth indication information.

18. The method according to claim 16 or 17, wherein before adding, by the user plane network element, the first information to the at least one data packet in each data packet set in the first PDU set, the method further comprises:
determining, by the user plane device, the at least two data packet sets in the first PDU set based on second information carried in a data packet in the first PDU set, wherein the second information is used to determine the at least one first data packet and the at least one second data packet in each data packet set.

19. The method according to claim 18, wherein the second information is carried in a real-time communication protocol RTP layer of each data packet in the first PDU set.

20. The method according to claim 18 or 19, wherein the method further comprises:
determining, by the user plane network element based on the second information carried in the data packet in the first PDU set, a first threshold corresponding to each data packet set in the first PDU set, wherein the first threshold is an upper limit of data packets, in a corresponding data packet set, that are allowed to be discarded.

21. The method according to claim 20, wherein sending, by the user plane network element, the first PDU set comprises:
sending, by the user plane network element, the first data connection session set when a transmission parameter of each data packet set is less than or equal to a corresponding first threshold; or
discarding, by the access network device, the first PDU set when a transmission parameter of one of the at least one data packet set is greater than a corresponding first threshold.

22. The method according to claim 20 or 21, wherein the first information in the at least one data packet in each data packet set in the first PDU set comprises a first identifier and/or a first threshold corresponding to a data packet set to which the data packet belongs, and the first identifier indicates a data packet set to which a corresponding data packet belongs.

23. The solution according to any one of claims 16 to 22, wherein adding, by the user plane network element, the first information to the at least one data packet in each data packet set in the first PDU set comprises:
adding, by the user plane network element, the first information to each data packet in the first PDU set.

24. The method according to any one of claims 16 to 23, wherein the first information is carried in an RTP layer or a general packet radio service tunneling protocol-user plane GTP-U layer of the at least one data packet in each data packet set in the first PDU set.

25. A communication method, comprising:
receiving, by a user plane network element, a first PDU set from an application server;
adding, by the user plane network element, first information to at least one data packet in each data packet set in the first PDU set, wherein the first PDU set comprises at least two data packet sets, each data packet set comprises at least one first data packet and at least one second data packet, the at least one second data packet is a redundant data packet of the at least one first data packet, and the first information indicates a data packet set to which the at least one data packet belongs;
sending, by the user plane network element, the first PDU set to an access network device; and
receiving, by the access network device, the first PDU set.

26. The method according to claim 25, wherein the method further comprises:
sending, by the access network device, the first PDU set when a transmission parameter of each data packet set in the first PDU set is less than a corresponding first threshold; or
discarding, by the access network device, the first PDU set when a transmission parameter of at least one data packet set in the first PDU set is greater than a corresponding first threshold.

27. The method according to claim 26, wherein the method further comprises:
sending, by a session management network element, first indication information to the access network device, wherein the first indication information indicates the access network device to transmit the first PDU set based on the transmission parameter of each data packet set in the first PDU set and the corresponding first threshold; and
receiving, by the access network device, the first indication information.

28. The method according to any one of claims 25 to 27, wherein before receiving, by the user plane network element, the first PDU set from the application server, the method further comprises:
sending, by the session management network element, third indication information and/or fourth indication information to the user plane network element, wherein the third indication information indicates a redundancy addition mode of the at least one first data packet set, and the fourth indication information indicates the user plane network element to add the first information to the at least one data packet in each data packet set; and
receiving, by the user plane network element, the third indication information and/or the fourth indication information.

29. The method according to claim 28, wherein the method further comprises:
adding, by the user plane network element, the first information to the at least one data packet in each data packet set in the first PDU set based on the third indication information and/or the fourth indication information, wherein the first information indicates the data packet set to which the at least one data packet belongs; and
determining, by the access network device, the at least two data packet sets in the first PDU set based on the first information carried in the at least one data packet in each data packet set in the first PDU set.

30. A communication method, comprising:
sending, by an application function, first indication information, wherein the first indication information indicates the access network device based on a transmission parameter of each data packet set in a PDU set and a corresponding first threshold; and
transmitting, by the application function, the PDU set.

31. The method according to claim 30, wherein the first indication information comprises the first threshold.

32. The method according to claim 30 or 31, wherein the method further comprises:
sending, by the application function, second indication information, wherein the second indication information comprises a first quantity, and the first quantity is a quantity of data packets in each data packet set in the PDU set.

33. The method according to any one of claims 30 to 32, wherein the method further comprises:
sending, by the application function, third indication information, wherein the third indication information indicates a redundancy addition mode of at least two data packet sets in the PDU set.

34. A communication method, comprising:
receiving, by a policy control function, fifth indication information, wherein the fifth indication information comprises a redundancy addition mode of at least two data packet sets in each PDU set of a first service;
generating, by the policy control function, sixth indication information based on the fifth indication information, wherein the sixth indication information indicates to transmit each PDU set of the first service based on a transmission parameter of each data packet set in the PDU set of the first service and a corresponding first threshold; and
sending, by the policy control function, the fifth indication information.

35. The method according to claim 34, wherein the fifth indication information further comprises a first threshold corresponding to each data packet set in each PDU set of the first service.

36. The method according to claim 34 or 35, wherein the fifth indication information further comprises a first quantity, and the first quantity is a quantity of data packets in the at least two data packet sets in each PDU set of the first service.

37. The method according to any one of claims 34 to 36, wherein the fifth indication information further comprises a third quantity, and the third quantity is an upper limit value of data packets, in each data packet in the at least two data packet sets in each PDU set of the first service, that are allowed to be discarded.

38. The method according to any one of claims 34 to 37, wherein sending, by the policy control function, the fifth indication information comprises: sending, by the policy control function, the fifth indication information to a session management network element.

39. A communication apparatus, wherein the communication apparatus comprises a unit or a module for performing the method according to any one of claims 1 to 15, claims 16 to 24, claims 25 to 29, claims 30 to 33, or claims 34 to 38.

40. A communication apparatus, comprising:
a processor, wherein the processor is coupled to a memory, and the processor is configured to invoke computer program instructions stored in the memory, to perform the method according to any one of claims 1 to 15, or the method according to any one of claims 16 to 24, or the method according to any one of claims 25 to 29, or the method according to any one of claims 30 to 33, or the method according to any one of claims 34 to 38.

41. A chip, comprising a processor and a communication interface, wherein the communication interface is configured to receive data and/or information and transmit the received data and/or information to the processor, and the processor processes the data and/or the information to perform the method according to any one of claims 1 to 15, or the method according to any one of claims 16 to 24, or the method according to any one of claims 25 to 29, or the method according to any one of claims 30 to 33, or the method according to any one of claims 34 to 38.

42. A computer-readable storage medium, wherein the computer-readable storage medium stores instructions, and when the instructions are run on a computer, the computer is enabled to perform the method according to any one of claims 1 to 15, or the computer is enabled to perform the method according to any one of claims 16 to 24, or the method according to any one of claims 25 to 29, or the method according to any one of claims 30 to 33, or the method according to any one of claims 34 to 38.

43. A computer program product, wherein the computer-readable storage medium stores instructions, and when the instructions are run on a computer, the computer is enabled to perform the method according to any one of claims 1 to 15, or the computer is enabled to perform the method according to any one of claims 16 to 24, or the method according to any one of claims 25 to 29, or the method according to any one of claims 30 to 33, or the method according to any one of claims 34 to 38.

44. A communication system, comprising:
an access network device, configured to perform the method according to any one of claims 1 to 15; and
a user plane network element, configured to perform the method according to any one of claims 16 to 24.

45. A communication system, comprising an access network device and a user plane network element, wherein the first network device is configured to perform the method according to any one of claims 1 to 15, and the user plane network element is configured to perform the method according to any one of claims 16 to 24.
